# EUROPEAN PATENT SPECIFICATION

(11) **EP 0 297 368 B1**
(45) Date of publication and mention of the grant of the patent: **13.11.1996**
(21) Application number: 88109663.0
(22) Date of filing: 16.06.1988
(51) Int. Cl.: G08B 3/10

(54) **Digitized stored voice paging receiver**
Personenempfänger mit digitalisierter gespeicherter Sprache
Récepteur d'appel de personnes à parole numérisée enregistrée

(30) Priority: 30.06.1987 US 68682
(43) Date of publication of application: 04.01.1989
(73) Proprietor: MOTOROLA, INC., Schaumburg, IL 60196 (US)
(72) Inventor: Bennett, Paul Thomas, Phoenix Arizona 85018 (US); Willard, David Frank, Plantation Florida 33313 (US); Tahernia, Omid, Coconut Creek Florida 33066 (US); Page, James Clinton, Lake Worth Florida 33467 (US); Spiro, Allan Ira, Boynton Beach Florida 33462 (US); Lambrecht, Frank Ellis, Miramar Florida 33025 (US)
(74) Representative: Ibbotson, Harold

(56) References cited:
- WO-A-83/01356
- US-A- 4 336 524
- US-A- 4 356 519
- Zwicker, Zollner; Elektroakustik; p271-177; Springer, Berlin, 1984
- Speech Design GmbH; Info on the SDX300; Germering, DE, 1985

## Description

### BACKGROUND OF THE INVENTION

### 1. Field of the Invention

This invention relates to paging receivers, and more particularly, to a paging receiver for receiving information including analog voice messages, digitizing the analog voice messages and storing the voice messages in a memory for playback.

### 2. Background of the Invention

Communications systems in general and paging systems in particular using transmitted call signals have attained widespread use for calling selected receivers to transmit information from a base station transmitter to the receivers. Modern paging systems and paging receivers in particular have achieved multifunction capabilities through the use of microcomputers which allow the paging receiver to respond to information having various combinations of tone, tone and voice, or data messages. This information is transmitted using any number of paging coding schemes and message formats.

In the operation of such paging receivers, important factors involved in their successful operation is the portability of the receiver, the limited energy available for the receiver, the limited availability of the radio spectrum, the fast response time required in today's active society, and the number of paging receivers included in the paging system. In such paging receivers, in order that the drain on the battery may be minimized, the paging receiver is systematically turned off and turned on to maximize the length of time energy is available from the battery (battery saving). The limited energy in which the paging receiver must operate constrains the type of electronic circuitry available for a paging receiver.

A typical voice type paging system uses analog voice channels for the transmission and reception of voice messages. While certain types of paging systems use binary signalling formats, transmission in an analog form remains the most common technique for voice signals. Prior art paging receivers that receive analog representation of voice signals are limited in several features that would be highly desirable. These include the ability to store a voice message in a reasonable size memory for recall at a later time and use of digital modulation techniques to store and reconstruct voice messages in the paging receiver. Digital processing of voice messages is, in general, qualitatively superior to analog processing for high sample rates. This is a result of the fact that once the voice message is in a digitally-represented form, it is not subject to the type of signal degradation that occurs in analog processing. Thus, it is beneficial to represent the voice message in digital form rather than as a voltage subject to the type of distortion inherent in analog processing techniques.

Another problem with prior art analog voice paging receivers is the ability to store a plurality of voice messages and selectively recall a voice message. Prior art analog voice paging receivers have typically stored the voice information on conventional analog magnetic tapes (e.g. U.S. Patent Number 4,356,519). While such voice type paging receivers are available, they are typically commercially unacceptable. Some of the reasons are the cost of the electronic components, the low battery life from the high drain of current required by the tape mechanism, and the difficulty in operating in a battery saving environment. Additionally, if a sequence of messages is stored on the tape, the recall of a single message is hampered by the inability of the analog magnetic tape to randomly select a single message.

In WO 83/01356 "Pager With Visible Display Indicating Unread Messages", assigned to the same assignee as the present invention, a pager, responsive to voice and data messages, annunciates voice messages in real time and has the ability of store data messages and subsequently display these on a visual display.

US-A-4,356,519 describes a paging device that includes a manually operable magnetic tape recorder.

### Summary of the Invention

In general, a communications receiver, such as a paging receiver for receiving analog information in a radio communications system, the information having at least one voice message, includes a receiving means, a decoding means, a memory means, and a conversion means. The receiving and decoding means receives information signals, including at least one voice message and control signals, decodes the information signals for selectively enabling a receiver correlating to the received control information, and decodes the information to recover the voice message. The conversion means converts the analog voice information to digital information, the digital inforamtion being representative of a replica of the analog voice message. The digital information is then stored ina memory of the selected receiver. In response to user generated inputs, the paging receiver selects a digitized voice message stored in the memory of the receiver, reconverts the digitized voice to an analog signal, and produces audible information from the analog signal representative of the original analog voice message.

In accordance with a first aspect of the present invention there is provided a method of operating a paging receiver according to appended claim 1.

In another aspect of the invention there is provided a digitized voice paging device according to the appended claim 5.

In a further aspect of the invention, there is provided a digital voice storage communication system according to the appended claim 9.

The invention therefore advantageously provides a device, methodology and system that permits digital storage and subsequent retrieval of voice messages directed towards a radio pager (paging receiver) in a communications system. Furthermore, the present invention provides a digitized stored voice paging receiver that permits the user to selectively play back a digitized voice message out of a plurality of stored voice messages.

In a preferred embodiment, the paging receiver includes a plurality of control switches. A first control switch initiates the playback of a previously stored voice message. A second control switch extinguishes the presentation of the analog voice message to a paging user. A third control switch selects a particular operating mode for the paging receiver.

In a preferred embodiment, the digitized voice paging device has a plurality of user selectable receiving modes and the converting means (38) operates independent of a mode selected by the user of the digitized voice paging device.

An exemplary embodiment of the invention will now be described with reference to the accompanying drawings.

### BRIEF DESCRIPTION OF THE DRAWINGS

For the purpose of illustrating the invention, there is shown in the drawings an embodiment which is presently preferred, it being understood, however, that the invention is not limited to the precise arrangement and instrumentality shown.

FIG. 1 is a schematic diagram of a digitized stored voice paging receiver embodying the present invention.

FIG. 2 illustrates a typical paging scheme useful in explaining the operation of the paging receiver.

FIG. 3 is a more detailed illustration of the hardware controller embodiment of the paging receiver.

FIG. 4 is a state diagram illustrating the particular operating states of the digitized stored voice paging receiver of the present invention.

FIG. 5 is a detailed flow chart illustrating the record state of the digitized stored voice paging receiver.

FIG. 6 is a flow chart showing the play state of the paging receiver of the present invention.

FIG. 7 is a flow chart illustrating the reset state of the paging receiver of the present invention.

FIG. 8 is a flow chart of the operating method of a microprocessor embodiment of the present invention showing a power on reset routine.

FIG. 9A is a flow chart illustrating an interrupt routine for the microprocessor embodiment of the present invention.

FIG. 9B is a continuation of FIG. 9A showing the interrupt routine for the play state.

FIG. 10A is a flow chart of a method for playing the most recently stored digitized voice message from a memory position.

FIG. 10B is a continuation of FIG. 10A illustrating a flow chart showing the operation of the microprocessor embodiment of the present invention for playing unread messages.

FIG. 11 is a flow chart for the microprocessor embodiment of the present invention illustrating the playback of the next most recent message stored in the paging receiver.

FIG. 12A illustrates the record routine for the microprocessor embodiment of the present invention.

FIG. 12B is a continuation of FIG. 12A illustrating the record routine of the microprocessor embodiment of the present invention.

### TABLE OF CONTENTS

### Detailed Description of the Preferred Embodiment

I. General Description
   A. Paging Receiver
   B. Operation
   C. Paging Scheme
II. Hardware Embodiment
III. Operation
   A. Record State
      1. Normal Mode
      2. Push to Listen (PTL) Mode
      3. Silent Mode
   B. Play State
   C. Reset State
IV. Microprocessor Embodiment of the Present Invention
   A. Power On Routine
   B. Interrupt Routine
   C. Play A Routine
   D. Play B Routine
   E. Record Routine

### DETAILED DESCRIPTION OF THE PREFERRED EMBODIMENT

### I. General Description

### A. Paging Receiver

In order to best illustrate the utility of the present invention, it is described in conjunction with a communication receiver, such as a paging receiver, capable of receiving, decoding, and storing transmitted analog or voice information. While the present invention is described hereinafter with particular reference to a paging receiver, it is to be understood at the outset of the description which follows it is contemplated that the apparatus and methods, in accordance with the present invention, may be used with numerous other communication receiving systems.

The paging receiver system described herein is associated with a paging system having a base station terminal, responds to coded data information from the base station terminal, and in turn, decodes, digitizes, stores, and provides analog or voice messages to a user during operation. With reference to the drawings in general, there is illustrated a paging receiver 10 and a method for receiving, decoding, digitizing, and storing voice messages transmitted from the base station terminal. The method in one form of the present invention includes a hardware controller for decoding, digitizing, storing and playing back messages. Another form of the invention includes a microcomputer embodiment of the hardware controller.

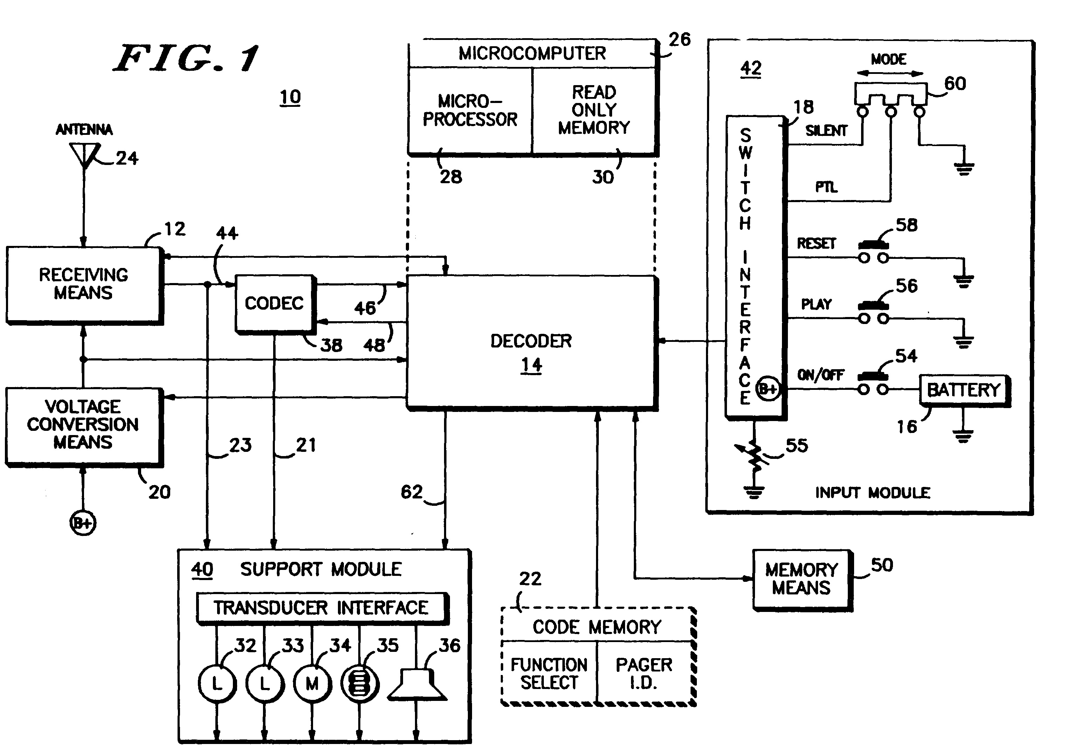

FIG. 1 shows a functional block diagram applicable to both a first and second embodiment of the present invention. The paging receiver 10 of the present invention includes a receiving means 12, a decoding means 14, a memory means 50, a support module 40, an input switch module 42, a voltage conversion means 20, and a converting means 38. An antenna 24 receives paging information including receiver control signals and analog information including speech signals representative of a voice message. The antenna 24 is coupled to receiving means 12 that is subject to the control of decoder 14. The decoder 14 not only controls receiving means 12, but may also operate receiving means 12 on an intermittent basis to extend the life of battery 16 through voltage conversion means 20. The receiving means 12 detects the presence of electromagnetic energy representing the paging information and applies the information to the converting means such as coder-decoder 38. The coder-decoder 38 converts the received analog signals, such as real time audio speech signals, to a stream of binary bits and reconverts stored binary bits to a replica of the original received analog signals, such as synthesized audio speech signals.

In the illustrated embodiment, the coder-decoder 38 (hereinafter referred to as CODEC) provides for the digital-to-analog and analog-to-digital conversion of speech signals. The CODEC 38, such as an adaptive delta modulator, can convert or encode an audio input signal to a digital data stream for storage and reconvert or decode a digital data stream to reconstruct an audio signal. In particular, the CODEC 38 monitors the real time audio signal on line 44 and compares it to a past value that it has reconstructed and generates a digital bit (sign) that indicates whether the reconstructed signal's voltage level is higher or lower than the present input value. The CODEC 38 then tries to adapt the reconstructed signal voltage to mirror the present value at the audio input by varying or modulating a current. The current charges or discharges a capacitor (not shown) which changes the reconstructed signal's voltage. The digital output on line 46 is the sign bit which indicates whether the reconstructed signal is behind the input or lower in voltage (logic "0") or ahead of the input or higher in voltage (logic "1") . The CODEC's digital output is stored in memory 50 and retrieved on line 48 to reconstruct a synthesized audio signal on line 21, thus closely replicating the real time audio signal in both amplitude and frequency. One example of such a coder-decoder is disclosed by N.S. Jayant in the publication "Adaptive Delta Modulation with a One-Bit Memory", Bell System Technical Journal, Vol. 49, No. 2, March 1970. The CODEC 38 is designed to operate at sampling rates (bit or clock rates) of 16 KHz, 25 KHz, and 33 KHz. The obvious implication of the three rates is that for slower clock rates, longer messages can be stored in a fixed amount of memory at the expense of a lower signal to noise (S/N) ratio. For example, at a 100 mV P-P 1 KHz signal at the input, the signal to noise degradation is 11 dB at 33 KHz, 14 dB at 25 KHz, and 23 dB at 16 KHz.

To conserve power, most of the CODEC 38 is turned off when there are no read/write operations to the memory. The output buffers and control logic are always on since it may be necessary to monitor the channel or provide a BEEP tone when there are no messages stored. Keeping the buffers and control logic on also eliminates the need for additional current source controls to handle the switching of an additional current source.

The receiving means 12 is further coupled by line 23 to a support module 40. Operating in response to decoder 14, the real time audio signal on line 23 is applied to support module 40 which supplies analog or digital signals to one of annunciation transducers 32-36. In particular, decoder 14 controls support module 40 to apply either the real time audio signal on line 23 or the synthesized audio signal on line 21 to speaker 36.

Decoder 14 is associated with memory means 50 which serves to include information for decoding the received information and for storing information received from CODEC 38. The CODEC 38 provides the analog-to-digital conversion of speech signals on line 46 which are stored in memory 50 as digital voice messages. A plurality of digital voice messages can be stored in memory 50 along with the status of each voice message. For example, a voice message may have either a read or unread status. The decoder 14 also functions to alert the paging user, store, recall, and playback voice messages.

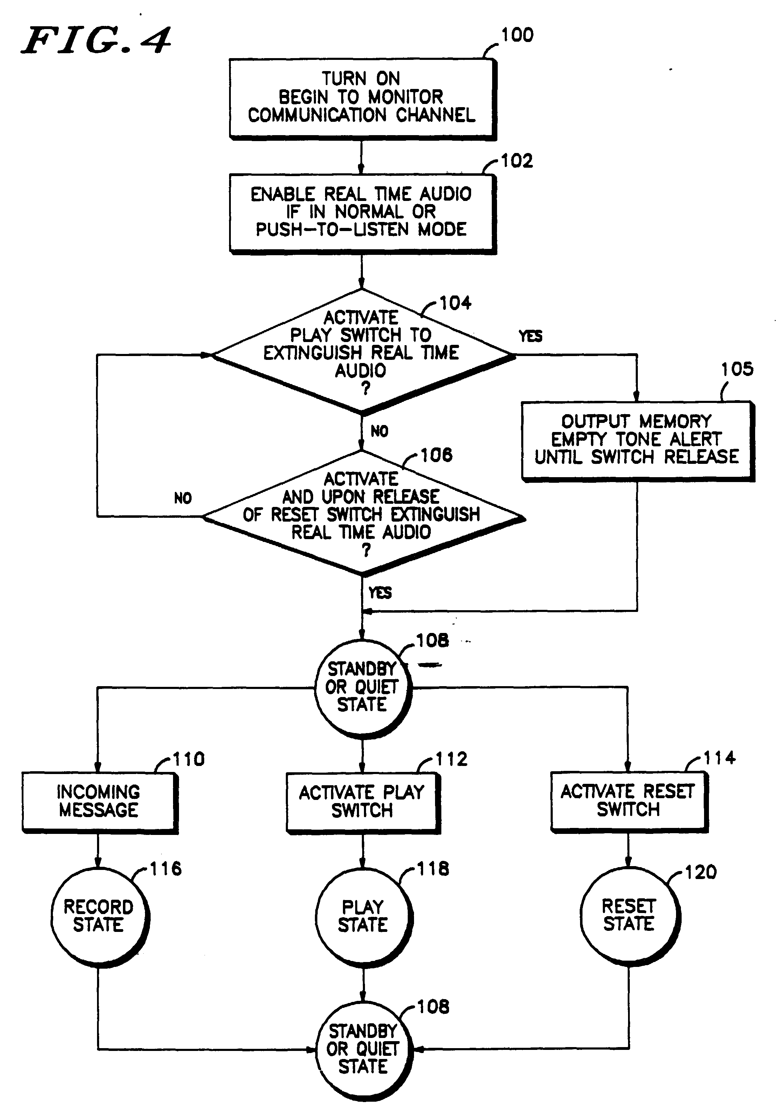

The paging receiving of FIG. 1 has the capability of storing selective call voice messages for providing them to support module 40 according to the state of a plurality of inputs, such as the state of the control switches of input module 42. A switch interface 18 provides input capability for control switches 54-60. Illustratively, control switch 54 is an on/off switch for controlling power from battery 16. Control input 55 is a volume control for speaker 36. Control switch 56 is a play switch for playing back voice messages previously digitized and stored in memory 50. Control switch 58 is a reset switch to reset the paging receiver system and monitor the real time audio signal. Control switch 60 is a mode switch for operating the decoder in one of three modes. These modes are the silent, push to listen (PTL), and normal modes, the operation of which is explained in detail with reference to FIG. 4.

Considering FIG. 1 in somewhat further detail, the battery 16 is shown connected to decoder 14 through a switch interface 18. Battery 16 provides power to decoder 14 through a voltage conversion means 20, such as a DC to DC converter. Decoder 14 is additionally connected to a code memory 22 further including regions designated function select and pager ID. The enclosure of code memory 22 with a broken line indicates a possibility that such a device can be made removable and therefore separable from the rest of the system. Another output 62 of decoder 14 is coupled to support module 40 to provide the necessary controls for generating alerts on one of alert transducers 32-36. The alert transducers may take the form of an illumination means 32 and 33, such as an LED, a vibration motor 34, a visible display counter 35, and an audio speaker 36. Output 62 also controls whether real time audio signals on line 23 from receiving means 12 or synthesized audio signals on line 21 from CODEC 38 are applied to audio speaker 36.

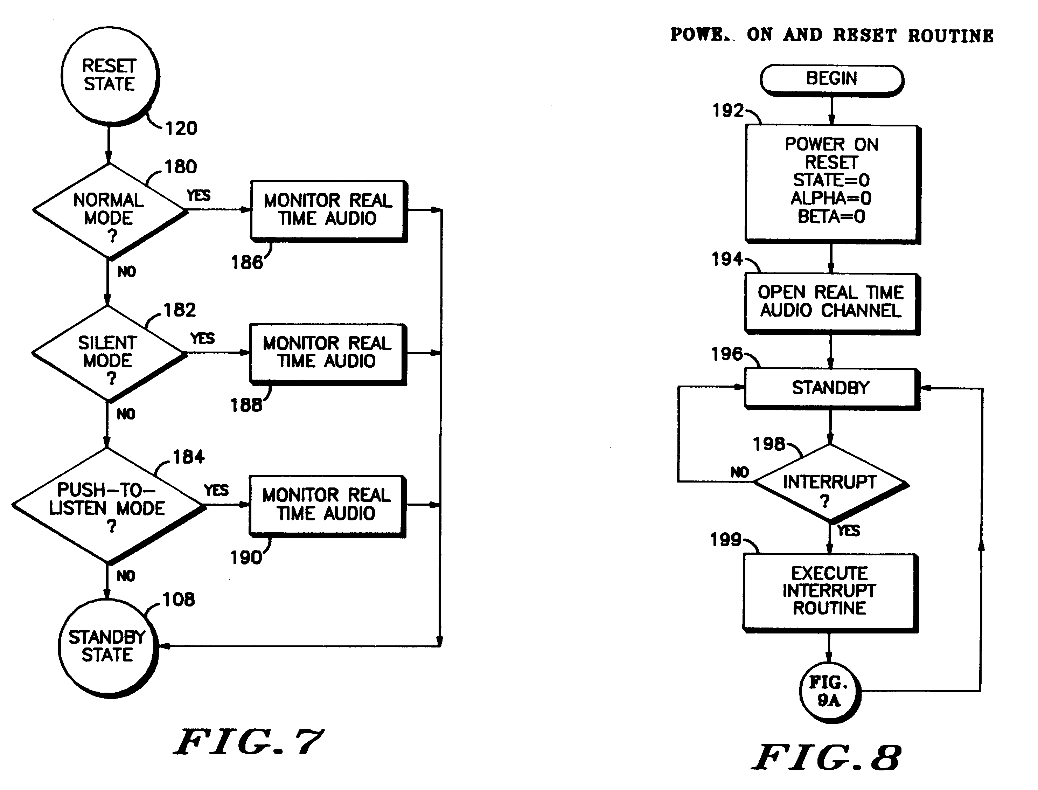

A microcomputer 26 is shown interconnected with decoder 14 by a broken line. This interconnection indicates that the hardware decoder may be functionally replaced entirely by a microcomputer 26. Microcomputer 26 is shown to be further comprised of a microprocessor 28 and a read only memory (ROM) 30. The ROM 30 includes the necessary instructions to operate microprocessor 28 to perform the functions as described in FIGS. 7-12B. Microcomputer 26 will have similar interconnections as does decoder 14. The replacement of decoder 14 by microcomputer 26 provides the exact same signal decoding functions and the resulting system function is indistinguishable to a paging user. Thus, the function of the two alternative embodiments are indistinguishable within a device.

### B. Operation

The operation of the paging receiver shown in FIG. 1 is such that the receiving means 12 is capable of receiving messages in any of several message formats through an antenna 24. The decoder 14 responds to the receive signals to analyze the data and select one of several decoding schemes for appropriately decoding the incoming information received by receiving means 12. As with all paging devices, the resulting decoded signal is tested for comparison with a designated pager address contained in code memory 22. On detecting correspondence between the received and decoded signal and the address in code memory 22, the decoder instructs the CODEC 38 to digitize the real time analog signal and provide the digitized signal to the decoder 14 for storage in one of a plurality of message locations or slots in memory 50. An alert output signal is produced by the decoder 14 to generate an alert indicating to the pager user that a message has been received and stored. In particular, the alert output signal from the decoder 14 is supplied to support module 40 to produce a signal on one of a plurality of transducers 32-36 indicative of the receipt of the message. Specifically, upon the receipt of a message, an unread message indicator 32 is activated and an unread message counter 35 is incremented. Additionally, if all message slots are full, a memory full indicator 33 is activated.

Because of the requirements for high speed, real time signal processing and the requirement of preserving extended useful life of the battery contained in paging device, voltage conversion means 20 functions in cooperation with decoder 14 to conserve battery 16. It may also be appreciated that the decoder 14 may be designated to operate in only one of a plurality of possible decoding schemes. This selective function may be supplied by the code memory 22 or may be factory preset independently of the code memory 22. It may also be appreciated that code memory 22 may contain several addresses, each one corresponding to the appropriately selected decoding scheme which is determined by the decoder 14 in response to signals received by receiver 12.

In addition, code memory 22 includes a function select region which is used to select various features of the pager device. It is advantageous to build in the circuitry for all functions and then provide information in code memory 22 which identifies the address of the pager and designates various combinations of the possible function annunciation features of the system.

The replacement of a hardware decoder by microcomputer 26 including microprocessor 28 and the software included within the read only memory 30 region provides the same diagram with block 14 removed and replaced in its entirety by block 26. The difference is in the internal functions of the microcomputer in that instead of the hardware decoder responding to the receiver 12, the microcomputer 26 uses microprocessor 28 as a software decoder for processing the received signals in real time according to the same predetermined routine as the hardware decoder. After the paging receiver is selectively identified, microprocessor 28 accesses the read only memory 30 for determining the correct instructions contained in that memory for processing the received signals, storing the signals, and replaying the signals. For a better understanding of the processing, storing and replaying of the received signals, attention is directed to FIGS. 8 through 12B for a detailed description of the operation of the paging receiver.

Continuing with reference to FIG. 1, the voltage conversion means 20 interacts with the microprocessor 28 and ROM 30 to conserve the battery for the system. When the microprocessor 28 detects the reception of a signal corresponding to a pager identification contained in the code memory, microcomputer 28 connects with support module 40 to produce a signal on one of the plurality of transducers 32-36 to produce a signal so that the pager user is made aware that a message has been received and stored. For either the hardware decoder or microcomputer, the form of the alert signal pattern provided to the pager user by either the decoder or microprocessor is indistinguishable.

To briefly summarize, in either the hardware or software embodiment, real time analog information received from a base station by receiving means 12 is applied to CODEC 38 and support module 40. Operating under control of decoder 14, CODEC 38 converts the analog information to digital information which is stored in memory 50. Depending upon the configuration of mode switch 60, the real time audio information is presented to the user via speaker 36, an unread message indicator 32 is illuminated, and unread message counter 35 is incremented. Upon activating the play switch, a digitized voice message is selected from memory 50 and applied to CODEC 38. The CODEC 38 reconverts the digital information to analog information and supplies the analog information to support module 40. The support module applies the analog signal to the speaker to produce a synthesized voice message being a replica of the original analog voice information.

### C. Paging Scheme

While it is clear that many types and formats of signal coding may be utilized for the present invention, the preferred embodiment uses a digital signal system designated as the Golay Sequential Code. The Golay Sequential Code (GSC) is a selective call paging protocol based largely on the current Golay binary paging format. A full description of the Golay code may be found in a paper entitled "Selective Signalling for Portable Applications" by Leonard E. Nelson, 28 IEEE Vehicular Technology Conference, Denver, CO, March 22-24, 1978. The Golay Sequential Code is an NRZ binary signalling format that has been greatly modified from the earlier format to accommodate intermixed tone only, tone and data, as well as tone and voice paging.

The GSC is an asynchronous paging format which allows pages to be transmitted individually or in batches. Maximum message throughput for tone only and tone and data pages is achieved in the batch transmission mode, while the individual call mode is useful in tone and voice paging.

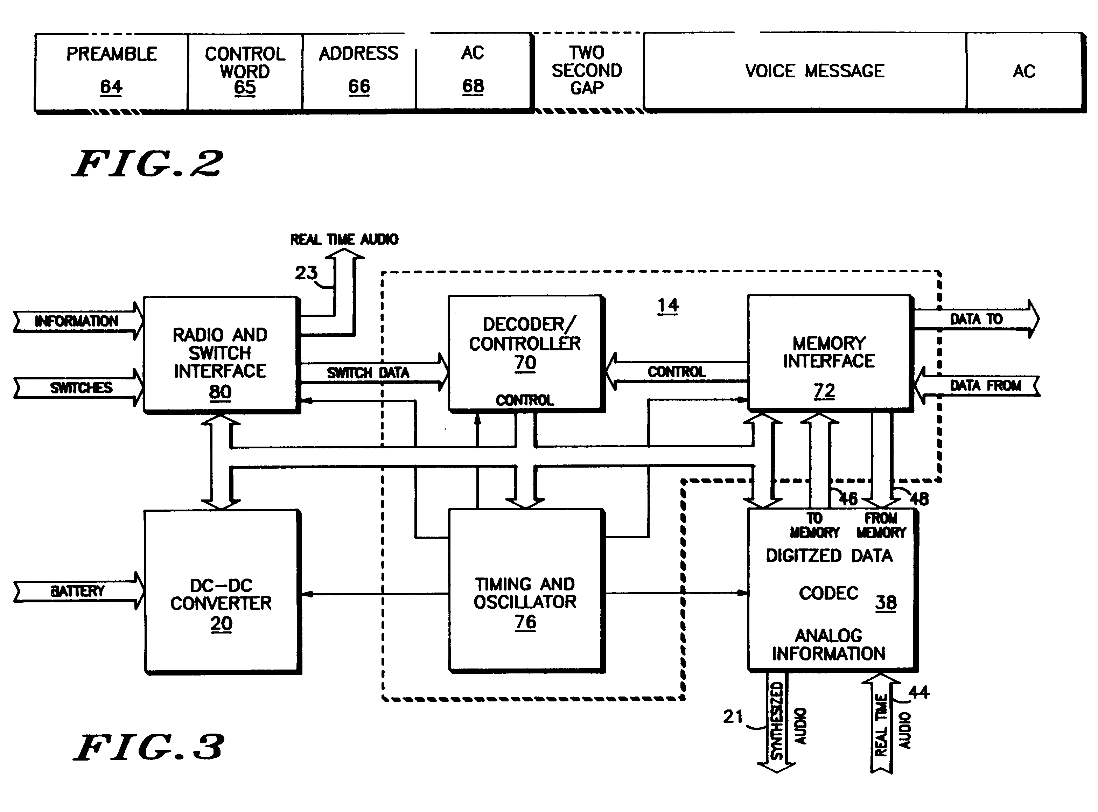

FIG. 2 shows a timing diagram for the normal message signalling routine for a normal voice page format. The single call address format consists of a preamble 64, a control word 65, an address code 66, and for voice paging, an activation code (AC) 68. The preamble serves to divide pagers within the system into groups for improved battery life, as well as to uniquely identify GSC transmissions from other coding schemes to facilitate channel sharing without sacrificing battery life or false call integrity. The control word 65 delimits the end of the preamble and supplies timing information for the batch mode decoding. The address uniquely identifies each pager and the AC is used to control the pager audio circuits in voice paging. The batch mode of operation allows a string of addresses to be transmitted following the control word.

While this is normal for the operation of pagers generally, the address is followed by an activation code and upon the reception and detection of the activation code, the individually addressed pager, depending upon its mode, commences a two-second alert mode to warn the pager user of the presence of a subsequent voice message. At the conclusion of the variable length voice message, the inclusion of a deactivation control word which, for the preferred embodiment, is the second detected occurrence of the activation control word and results in muting the audio channel.

In addition to enabling pagers to operate in a battery saver mode, the polarity of the preamble identifies the transmission mode as single call or batch. For instance, when the preamble words are transmitted with one predetermined bit polarity, the single call mode is identified. If the preamble bits are inverted, the batch mode is indicated.

The control word, activation code, and address code all use a two-word format consisting of 28 bits of comma followed by two (23,12) code words. The comma is a zero bit reversal pattern transmitted at 600 bps. The two Golay code words (word 1 and word 2) are separated by a half bit space. The polarity of the half bit space shall be opposite the first bit of the second words and the starting comma bit must be the same polarity as the first bit of the first word. The control word and activation code are determined (fixed) for the preferred system. Word 2 of the control word and activation code are the inverses of the fixed word. That is, the second word is the inverse of the first word.

The address format is identical to the control word and activation code formats regarding the number of bits, the rules for comma and the half bit space. The address word 2 may be chosen from any word of the (23,12) code except for all zeros and all ones combinations. Thus, there are 4094 potential second words made up of 12 information bits and 11 parity bits. The first words are chosen from a 100 word subset of the Golay code. To generate the binary bit patterns for the (23,12) Golay code, the decimal representation of the code word is converted into binary. This binary representation is rewritten least significant bit to the left.

The GSC format allows data pages to be intermixed with tone only or tone and voice pages. A data page consists of pager address followed by one or more data blocks. The data block is identical in length to an address block and may be freely substituted for addresses in the batch operating mode. The single call mode can also be used by following the pager address with the data message. Data information is transmitted at 600 bps to minimize the cross falsing probability between the addresses and data. For a more detailed description and implement of the Golay Sequential Code for tone, tone and voice, and data pages, reference is made to U.S. Patent No. 4,427,980 assigned to the present assignee of the present invention.

### II. Hardware Embodiment

FIG. 3 shows a block diagram for the hardware embodiment of decoder 14 of FIG. 1. The hardware decoder 14 includes a radio and switch interface 80, a controller 70, a DC-to-DC converter 20, and a timing and oscillator section 76. The controller 70 interprets input signals from the radio and switch interface to accomplish the read/write operations associated with the receiving, digitizing, storing, and playing back of messages. The controller 70 includes a program logic array sequencer, such as a Monolithic Memories 20L10 programmable array logic, a control hardware section for controlling the operations of the other sections of the decoder, a counter section for handling message queues, a counter section for handling the physical memory pointers, a memory section for flagging individual messages as read or unread, a small state machine to determine the mode status of the controller, and a multiplexing decoder to interpret hardware jumper inputs for controlling the length of messages, maximum number of messages, and the type of memory connected. In addition to controlling the operation of the sections of the decoder, the controller operates several sections of the controller in a battery saving mode in which power is selectively disabled from appropriate sections of the decoder when they are not needed. For example, at power up, the controller selectively disables power to the DC-to-DC converter and the memory interface.

The radio and switch interface 80 buffers inputs from the receiving unit and switches for generating the appropriate levels to the controller and CODEC 38. The radio and switch interface 80 may take the form of a level shifter, such as a Motorola MC14504B. The memory interface interfaces the controller to the main memory of the paging receiver by providing the necessary address, control and data transmission signals for storing and retrieving data to the memory. The memory interface may take the form of a Memory Management Unit as manufactured by Motorola under their designation MC68451.

Table 1 illustrates the number of messages that can be stored in the paging receiver using particular configurations of memory when the CODEC is operating at a specific bit rate. Even though the table lists specific memories, it is to be understood that numerous other memories can be used in the practice of the present invention. Continuing with the above described table, referring to the 1 megabit CMOS DRAM, if the paging receiver is configured for two messages and the CODEC is operating at 25 kilobits per second (KbPS), Table 1 illustrates that 20 seconds of voice information can be stored in one message slot. As is evident from Table 1, the CODEC operates in a plurality of operating rates such as 16 KbPS per second, 25 KbPS per second, and 32 KbPS per second. The operating rates can be selected by jumper connections within the paging receiver or by switches external to the paging receiver.

**Table 1**

| Message Length as a Function of Bit Rate and Memory Size | | | |
|---|---|---|---|
| **One 256K CMOS DRAM** | | | |
| Number of Messages | 16 KBPS | 25 KBPS | 32 KBPS |
| 1 | 16 second | 10 second | 8 second |
| 2 | 8 second | 5 second | 4 second |

| **Two 256K CMOS DRAMs** | | | |
|---|---|---|---|
| Number of Messages | 16 KbPS | 25 KbPS | 32 KbPS |
| 1 | 32 second | 20 second | 16 second |
| 2 | 16 second | 10 second | 8 second |
| 4 | 8 second | 5 second | 4 second |

| **One 1 Meg CMOS DRAM** | | | |
|---|---|---|---|
| Number of Messages | 16 KbPS | 25 KbPS | 32 KbPS |
| 1 | 64 second | 40 second | 32 second |
| 2 | 32 second | 20 second | 16 second |
| 4 | 16 second | 10 second | 8 second |

Pursuing FIG. 3, the timing and oscillator section 76 provides the necessary timing signals and clock signals for all circuits in a manner well known in the art. The timing and oscillator section may take the form of a programmable timer/oscillator manufactured by Motorola under the designation MC145541B.

The DC-to-DC converter 20 provides the necessary operating voltage to the memory from one or two cell batteries. The DC-to-DC converter 20 also includes current sources to provide power for the remaining circuitry. In addition to the detailed diagram of the hardware decoder, the CODEC 38 is shown operatively coupled to the hardware decoder. The CODEC 38 digitizes real time audio information and provides the digitized data to the memory in phase for appropriate storage under the control of controller 70. When the paging receiver is operated in the play state, the CODEC under control of controller 70 receives data via memory interface 72 and converts the digitized data to synthesized audio information which is provided to the paging receiver user as synthesized audio.

### III. Operation

Referring to FIG. 1, in the operation of the paging receiver system, the paging receiver includes an on/off control switch 54, a reset switch 58, a mode switch 60, a volume control 55, a playback or play switch 56, a memory unread indicator 32, a memory full indicator 33, and an unread message counter 35. The on/off control 54 operates to turn the paging receiver on and off. The reset switch 58 resets the paging receiver by returning it to its standby or quiet state. The reset switch also functions as a real time audio channel monitor control, whereby activating the reset switch at any time allows the user to monitor the real time audio channel. The mode switch 60 places the paging receiver in different modes. The modes of operation of the paging receiver are the normal, push to listen (PTL), and silent mode. For a better understanding of the different modes of operation, attention is directed to FIGS. 4-7 wherein the modes of operation are described in detail.

The volume control 55 varies the loudness of the paging receiver's audio. The play switch 56 operates to retrieve messages from memory. The memory unread indicator, such as an LCD or LED, indicates that the paging receiver has received a message that has not been heard by the user. The memory full indicator indicates that all memory slots include a message and that the next message received will overwrite the oldest message received in time in memory. The unread message counter 35 indicates the number of unread messages stored in memory.

The explanation now proceeds to FIG. 4 which is a block diagram showing the operating states of the paging receiver of the present invention. The operating states comprise the standby, record, play, and reset states. Initially, the paging receiver is turned on and the paging receiver, depending upon the mode of operation, begins to monitor the communication channel for information, step 100. If the paging receiver is in the normal or PTL modes, the real time audio channel is enabled, step 102. Enabling the real time audio channel permits the user to hear the real time audio information. The play switch is activated for extinguishing the real time audio and the paging receiver state is transferred from the turn on state to a standby or quiet state 108 via steps 104 and 106. Additionally, upon activation of the play switch, a memory empty tone is produced until deactivation of the play switch, step 105.

Referring back to step 104, if the reset switch is activated, upon deactivation, the reset switch extinguishes the real time audio, step 106. Eventually, after turn-on, the reset or play switch is activated and the paging receiver system is vectored to the standby state 108. Upon occurrence of an incoming message 110, activation of a play switch 112, or activation of the reset switch 114, the paging receiver system is vectored to either a record state 116, a play state 118, or a reset state 120, respectively. The explanation now proceeds to a discussion of each of the states.

### A. Record State

In the record state 116, depending upon the position of the mode switch, one of three modes are selected, either the normal, silent or PTL mode.

### 1. Normal Mode

In the normal mode, after detecting incoming information, the paging receiver alerts the user with an alert characteristic of the decoder type, either a tone or vibrate alert. The alert is then followed by the voice message. Simultaneously, the voice message is being recorded in memory and may be retrieved any time after storage. At any time during the record (storage) cycle, the activation of the play or reset switch extinguishes the real time audio. Before storage is complete, the user can again monitor the channel with either the play or reset switch. If the audio is not reset at the end of storage, the paging receiver continues to monitor the channel until a activation of the play switch or reset switch. In practice, the paging receiver of the present invention has a limited storage time allocated to a given audio message, depending upon the amount of memory that is used within the paging receiver. If the voice message continues past the maximum storage time, the user may listen to the message in real time in its entirety but will not be able to replay the entire message since recording terminates after the predetermined storage time. On the other hand, if the message is shorter than the predetermined storage time, the paging receiver stores any channel noise after the message until the memory slot is filled.

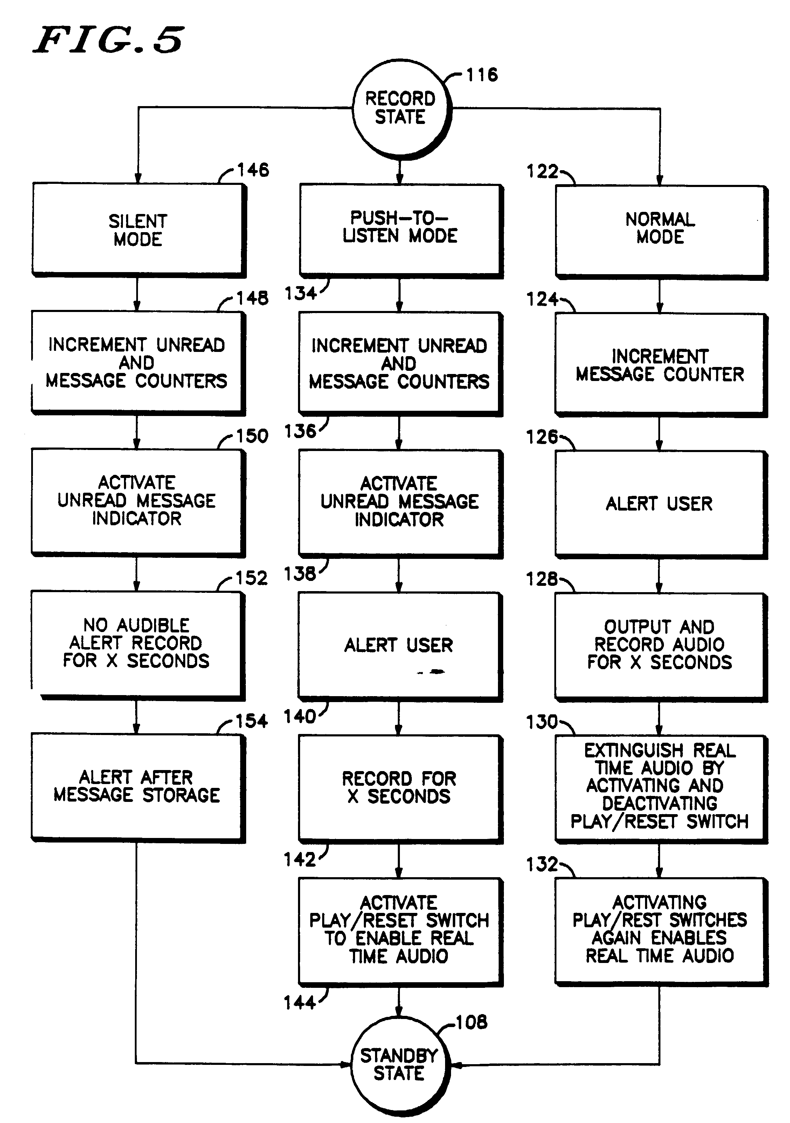

Referring to FIG. 5, upon the occurrence of an incoming page and the selection of the mode switch to the normal mode, the operational state of the paging receiver is transferred to the normal mode, step 122. The message counter is incremented by one to indicate the recording of a new message 124. In the normal mode, the user is alerted and, depending upon the memory configuration of the paging receiver, a predetermined number of seconds (X), such as eight seconds (see Table 1 for examples of X), of voice information is recorded in the first available message memory slot, steps 126 and 128. The user is able to listen to the real time audio at the same time it is being recorded. Activating or deactivating the play or reset switch extinguishes the real time audio, step 130. Activating the play or reset switch (only if the storage cycle is not complete) again enables the real time audio, step 132. After recording "X" seconds of a voice information, the recording is terminated and the paging receiver continues to monitor the channel. If any voice information continues to exist after the predetermined number of seconds, it will be output in real time audio to the paging receiver user until extinguished. After the voice information is extinguished, real time audio output is terminated and the paging receiver system returns to the standby state, step 108.

### 2. Push to Listen (PTL) Mode

During receipt of a page in the PTL mode, the paging receiver alerts the user and indicates an unread message. However, instead of outputting voice audio as in the normal mode, the audio is automatically reset (no audio presented to the user), although the message does get recorded at that time. Upon activation and continued activation of either the play or reset switch, a user can hear a message in real time. At this time, the message is considered to be read. On the other hand, activating either switch during the alert but releasing it before the voice audio begins does not constitute reading of a message and the unread indicator remains active. Before the record cycle has ended, continued activation of either the play switch or reset switch monitors the channel. The subsequent release of the switch resets the paging receiver to its standby or quiet position.

In the PTL mode 134, the unread message counters are incremented to indicate a message received, step 136. The unread message indicator is subsequently enabled to indicate to the user an unread message is recorded in memory, step 138. The user is alerted and the voice information is recorded for "X" seconds, steps 140-142. To hear the voice information in real time, the play or reset switch must be activated, step 144. The message is now considered "read". Upon recording for "X" seconds of voice information, the system returns to the standby state 108, but the user can continue to monitor the real time audio via either switch as long as the activation of the switch occurred before the termination of the record state.

### 3. Silent Mode

Upon receiving an incoming message, recording begins and the unread indicator is activated. If during the incoming voice message activation of either the play or reset switch occurs, the voice message is applied to the speaker transducer to provide a real time audio message. Once the record cycle has ended, the paging receiver alerts the user of a page. If the paging receiver includes a vibrator, the activation of either the play or reset switch resets the vibrator. After resetting the alert, activating the play switch permits the continued output of the voice message. This allows a user to stop vibration within the paging receiver without having the page automatically omitted. As in the push to listen mode, a message is considered unread and the unread indicator is activated. If the reset switch is accidentally pressed prior to the detection of a page (i.e., audio is enabled while a page is detected), the paging receiver reverts to the normal mode and must be manually reset. If the reset switch is activated after detection of the page, the paging receiver monitors the channel with no reversion to the normal mode.

Continuing with reference to FIG. 5, in the record state 116, if the mode switch is set to the silent mode position, an incoming page transfers the paging receiver from the standby state 108 to the silent mode 146. First, the unread and message counters are incremented and the unread message indicator activated, steps 148 and 150. In the silent mode, no audible alert is generated, however, a paging receiver that is equipped with a vibrator will vibrate after storage for a predetermined number of seconds, steps 152-154. After "X" seconds of data are recorded, the system returns to the standby state 108.

In any of the above modes, except when alerting, activation and continued activation of the reset switch provides real time channel monitor. Also, in any of the above modes, if memory is full, an incoming message causes the oldest message to be overwritten, regardless of whether it is read or unread.

### B. Play State

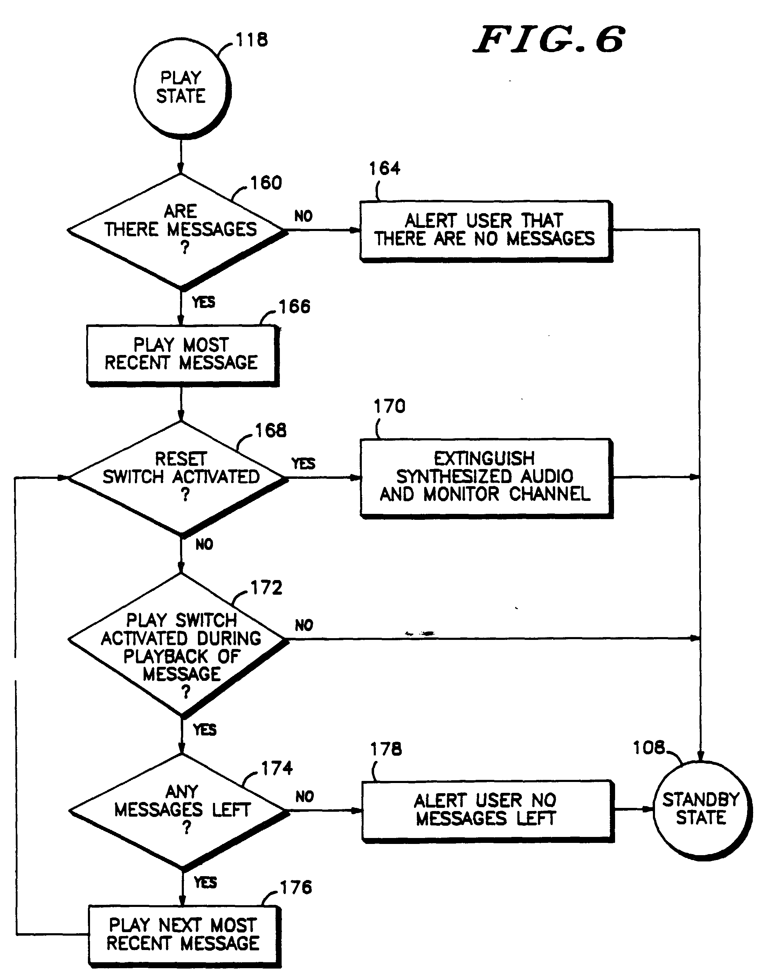

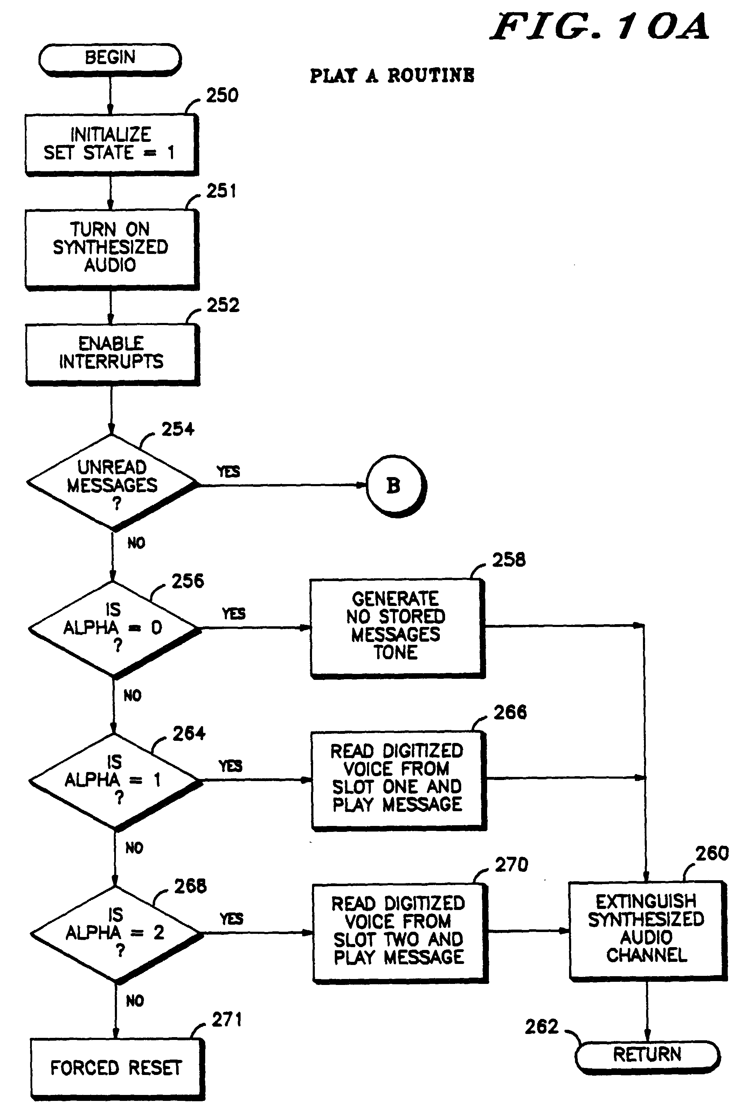

Referring to FIG. 6, from the standby state 108, the activation of the play switch transfers the system to the play state 118 to begin replaying of the stored messages from most recent to oldest. If the play switch is activated with no messages in memory, a two KHz "memory empty" tone sounds for the duration of activation indicating that the paging receiver is functioning but no messages have been received since turn on, steps 160-164. The system then returns to the standby state 108 when the switch is deactivated, step 165. Referring back to step 160, if messages exist, then the most recent message is played from memory by synthesizing the audio, step 166. Reference is made to FIGS. 10A-11 for a more detailed discussion of the operation of playing back stored voice messages via a microprocessor. If the reset switch is activated and deactivated at any time during the replay operation, replay is aborted by extinguishing the synthesized audio and the paging receiver returns to the standby state 108 after the reset switch is deactivated, steps 168-170. While the reset switch is activated, the real time audio is enabled.

Referring back to step 168, if the play switch is not activated during the replay of a message, the paging receiver returns to the standby state at the end of the message, unless there is an unread message in memory, steps 172-174. If an unread message in memory exists, it is also replayed with a one-half second two KHz tone separating the messages. It is important to note that messages are automatically played in reverse chronological order, so if a read message exists between two unread messages, the read message is also heard.

The activation of the play button during replay of any message causes the pager to jump ahead and begin replay of the next most recent message in storage, steps 174-176. Activation of the play button during the replay of the oldest message in memory returns the pager to its initial standby state, step 178.

To clarify the issue of a "read" message, a message is considered "read" when the first two seconds of the message slot are played even if no voice is present. This prevents accidental clearing of the unread message flags if the user wants to reset his pager to the standby mode by cycling through the messages with the play switch.

If a new page is received during the replay operation, the replay is aborted and the paging receiver reverts to the normal mode. At the end of the incoming message, manual reset quiets the paging receiver. Once reset, the pager returns to the previously chosen mode of operation.

As previously stated, only messages received while in the silent or PTL modes are considered unread and are tracked by the unread message indicator. Messages heard in the PTL mode by holding down the play or reset switch following the alert are considered "read." Once all messages are read, the unread indicator is extinguished.

In the PTL or silent mode, a change made to the normal mode indicates that the user is now available to hear messages. Therefore, if there exists any unread messages in storage, all stored messages (whether read or unread) automatically begin playing in reverse chronological order until all unread messages are played out. Each message is separated by a one-half second two KHz tone. Pushing the reset switch extinguishes the synthesized audio tone portion of the message. At that time, the first message that is played is considered read if the first two seconds of the memory slot have expired. Any other unread messages remain unread and the unread message indicator continues to be active. If the most recent message is unread, pushing the reset switch cancels the unread message indicator (after the first two seconds) and resets the paging receiver to its standby state. Any other mode changes do not affect the messages.

### C. Reset State

Referring to FIG. 7, the activation and deactivation of the reset switch transfers the system to the reset state 120. If the mode switch is set to the normal mode, the real time audio is enabled, steps 180-186. If the silent mode is selected, the real time audio is enabled, steps 182-188. Finally, if the PTL mode is selected, the real time audio is also enabled, steps 184-190. The system is then returned to the standby state 108.

Prior to relating the above operation to the microprocessor embodiment of the paging receiver system, a summary of the operations in general may merit review. The following tables include a brief description comparing the operation of the play button and reset button during different operating states of the paging receiver system.

**Table 1**

| NORMAL MODE | | |
|---|---|---|
| | PLAY BUTTON | RESET BUTTON |
| After turn-on alert | Activating the switch extinguishes the real time audio and outputs the 2 KHz "memory empty" tone for duration of activation. Upon deactivation, the 2 KHz tone is extinguished. | Extinguishes real time audio channel upon deactivation. |
| | | |
| Standby | With each successive activation, initiates playback of the next message in queue. If playing oldest message, activation switch returns radio to standby state. If no messages are stored, a "memory empty" tone is generated upon switch activation. | Monitor real time audio. |
| | | |
| During Alert | No action. | No action. |
| | | |
| During Voice | Extinguishes real time audio upon switch deactivation. | Extinguishes real time audio upon switch deactivation. |

**Table 2**

| PTL (PUSH-TO-LISTEN) MODE | | |
|---|---|---|
| | PLAY BUTTON | RESET BUTTON |
| After turn-on | Activating the switch ouputs a 2 KHz "memory empty" tone for duration of activation. Resets real time audio channel on activation; resets 2 KHz tone upon deactivation. | Extinguishes real time audio upon deactivation. |
| | | |
| Standby | With each successive activation, initiates playback of the next message in queue. If playing oldest message, activating switch returns radio to standby state. If no messages are stored, a "memory empty" tone is generated upon switch activation. | Monitor real time audio channel. |
| | | |
| During Alert | No action. | No action. |
| | | |
| During Voice | Listen to audio real time. Provides limited channel monitoring capability. | Listen to audio real time. |

**Table 3**

| SILENT MODE | | |
|---|---|---|
| | PLAY BUTTON | RESET BUTTON |
| At turn-on alert | Radio vibrates for a predetermined time period such as 8 seconds or until play switch is activated. | Radio vibrates a predetermined period such as 8 seconds until reset switch is activated. |
| | | |
| Standby | With each successive activation, initiates playback of the next message in queue. If playing oldest message, activating the switch returns radio to standy state. If no messages are stored, a "memory empty" tone is generated upon switch activation. | Monitor real time audio channel. |
| | | |
| During Alert | Resets vibrate alert. | Resets vibrate alert. |
| | | |
| During Voice | (By chance) Listens to real time incoming audio. However, message is not considered read. | (By chance) Listens to real time incoming audio. However, message is not considered read. |

### IV. Microprocessor Embodiment of the Present Invention

FIGS. 8-12B are flow charts explaining the programs or routines as stored in the read only memory 30 to operate the microprocessor implementation of the paging receiver.

### A. Power On Routine

Referring to FIG. 8, there is shown a flow chart for the power on sequence which takes the paging receiver from the off mode to the standby mode. Upon power up, the system is vectored to the power on reset routine, step 192. The power on reset routine initializes the hardware and the software to process the incoming paging information and to store the digitized voice information in the appropriate memory slots as received. Specifically, STATE, ALPHA, and BETA variables are reset to initial conditions. Briefly, STATE relates to playing back the message in chronological order from earliest to oldest. ALPHA points to the memory slot having the most recent message. BETA points to the memory slot having the next most recent message. Their use will become apparent with reference to the remaining figures. After basic housekeeping is completed, the power on routine passes control to the open routine, step 194. The open routine enables the real time audio channel to allow the paging receiver to listen to incoming information. Upon completion of these tasks, the open routine passes control to the standby routine, step 196.

The standby routine 196 enables the interrupt system for the microprocessor and prepares the paging receiver to receive incoming information. The system as illustrated is an interrupt driven system in which an event generates a specific level on an input line to the microprocessor. In response, the microprocessor saves the current executing address and branches to a memory address which includes a routine to process the interrupt generated by the event, step 198.

Two methods of implementing the above sequence are commonly used in microcomputers. These are called polled interrupts and vectored interrupts. Polled interrupts are those in which each peripheral device is tested, using either hardware or software, until the requesting device is found. Program execution is then directed to the appropriate interrupt-service routine which executes the data exchange. In this method, the priority of the device is determined by the relative position of a device in the polling sequence. In contrast, vectored interrupts are those in which the event causes program execution to proceed directly to the appropriate service routine.

In the illustrated embodiment, the polling interrupt system is described, however, it is to be understood that a vectored interrupt system would work just as well. After the interrupt system is enabled, the microprocessor waits in the standby state for an interrupt, step 196.

### B. Interrupt Routine

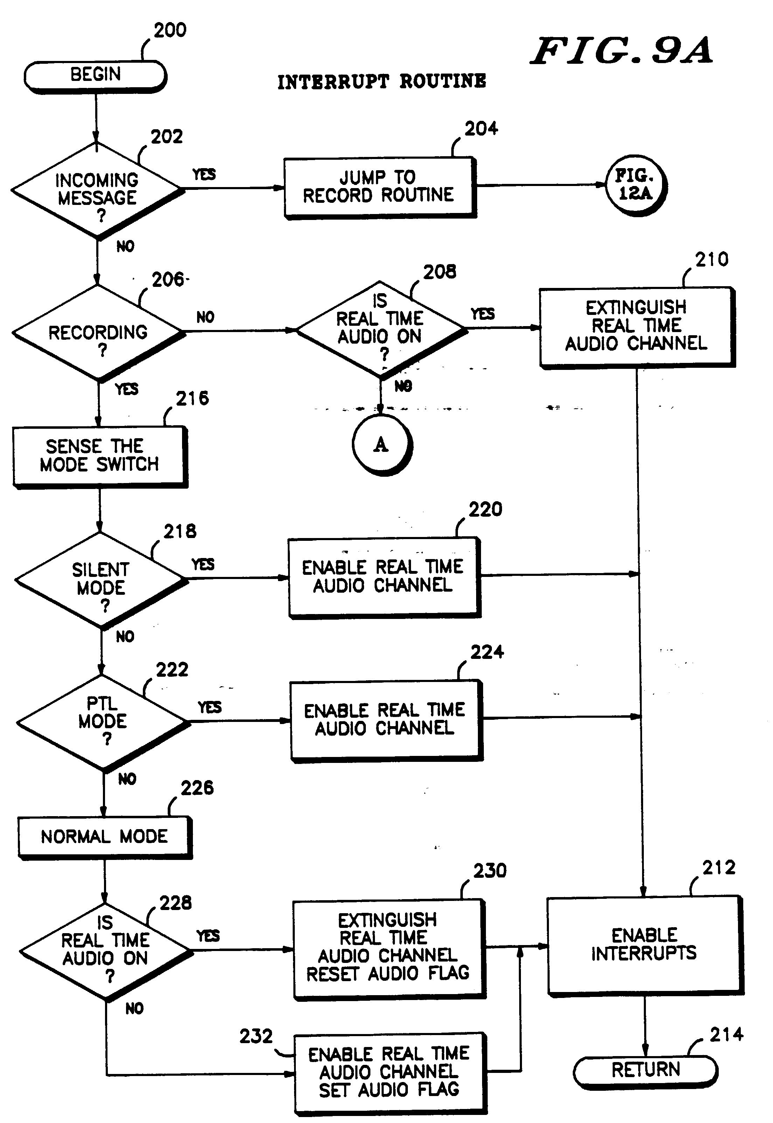

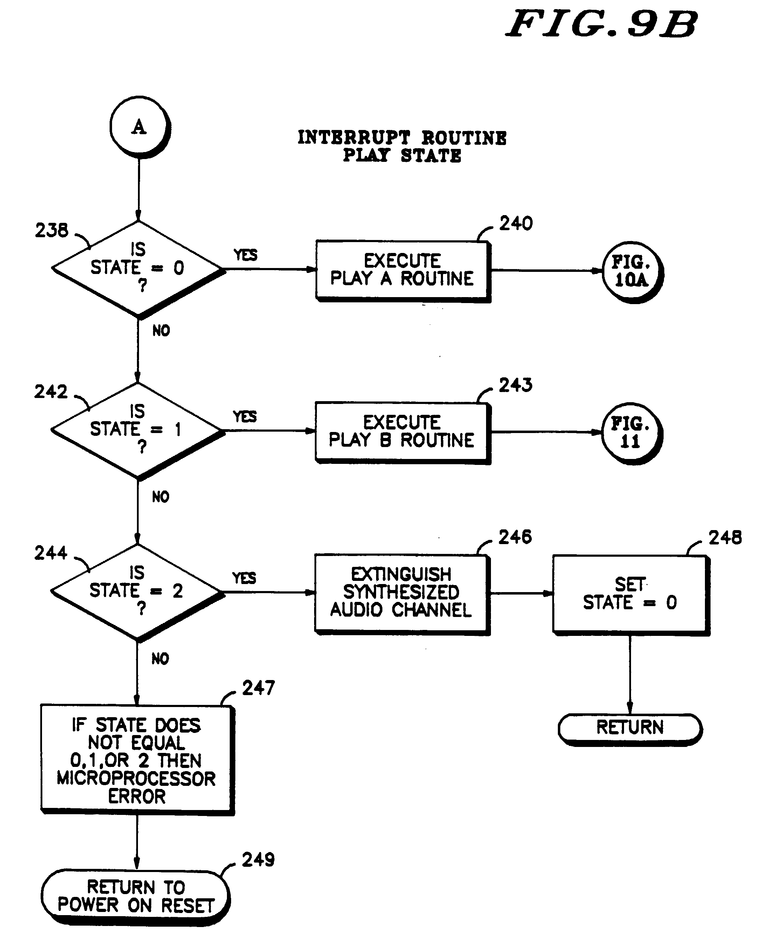

Eventually, an interrupt is caused by either incoming paging information, the activation of the reset switch, or the activation of the play switch, step 198. Upon the occurrence of the interrupt, the microprocessor is vectored to an interrupt routine, step 199, a detailed flow chart of which is shown in FIGS. 9A-B. Since the receipt of incoming paging information, the activation of the reset switch or activation of the play switch generates an interrupt, the microprocessor must determine which condition generated the interrupt. The microprocessor is vectored to the beginning of the interrupt routine, step 200. The method then determines if the interrupt was generated by either incoming information, the reset switch or the play switch.

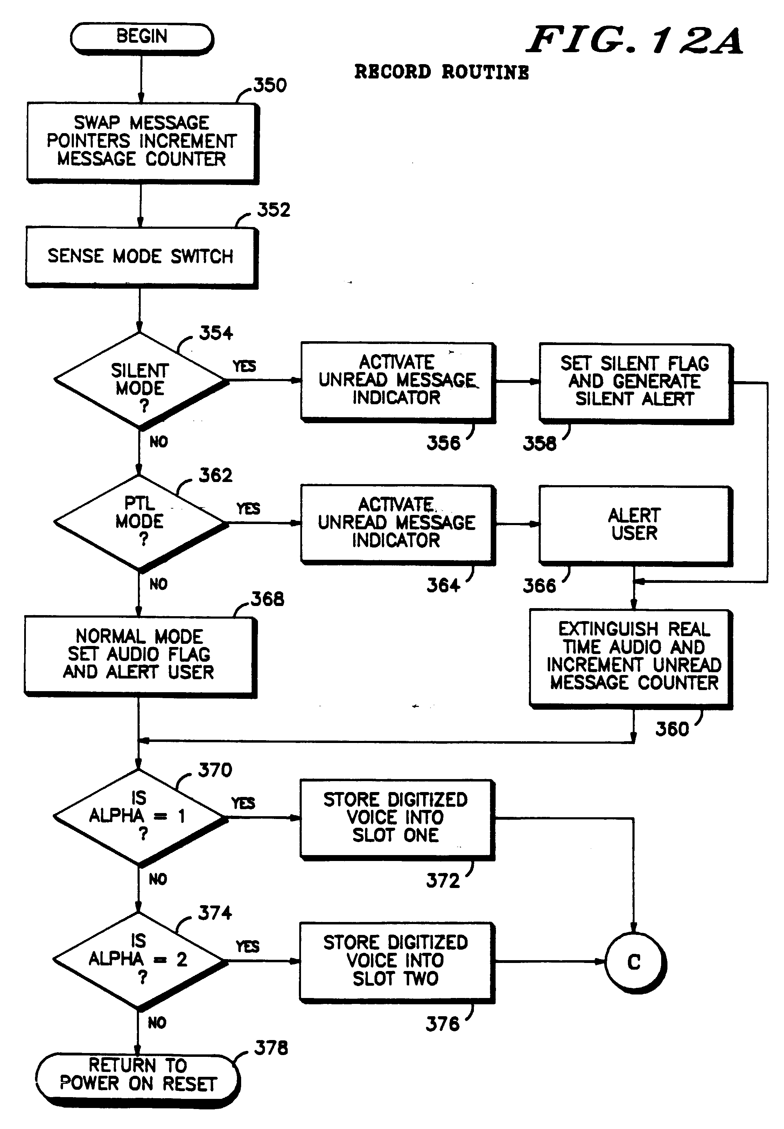

Referring to FIG. 9A, if the interrupt is caused by an incoming message, the message must be recorded, step 202. The method vectors the microprocessor to a record routine which records the message into one of a plurality of empty message slots, step 204. If no empty message slots exist, the message is recorded into the message slot having the oldest message. A complete disclosure of the record routine is shown with respect to FIGS. 12A-B.

For purposes of illustration, the paging receiver of the present invention is shown with only two message slots. However, a plurality of message slots can be used which is the subject of copending application entitled "Prioritization of Stored Messages in a Digital Voice Paging Receiver", having serial number 07/068,683, filed even date herewith, having attorney's docket number CM00485J, invented by Fisch et al., being assigned to the assignee of the present invention.

Referring back to step 202, it is determined whether the paging receiver is recording by polling an encoder line on the CODEC, step 206. If the system is not in the record state, the system is in either the play or standby state and the interrupt was generated either by the play or reset switch, step 208. If the real time audio is enabled, this implies the user is monitoring the real time audio channel in the standby state and the method extinguishes the real time audio, step 210. After the real time audio is extinguished, the method enables the interrupts so as to detect any further interrupts, step 212. The method then returns. Referring back to step 208, if the paging receiver is not recording and the real time audio channel is extinguished, this implies the system is in the play state. Thus, the method determines whether the user has activated the play switch to play back a message as will be discussed with reference to FIG. 9B.

Referring back to step 206, if the system is recording, then the interrupt was generated by either the play or reset switch during the record state. The method then senses the mode switch to determine whether the silent, PTL, or normal modes are selected, step 216. The method then determines whether the silent mode is selected, step 218. If the silent mode is selected, this implies that the user has activated the play or reset switch to enable the real time audio channel. The method enables the real time audio channel, enables the interrupts and returns, steps 220, 212 and 214.

Referring back to step 218, the method then determines if the PTL mode is selected, step 222. If the PTL mode is selected, this implies that the user wishes to hear the real time audio while it is being recorded. Therefore, the method enables the real time audio channel, step 224. The method then enables the interrupts, and returns, steps 212-214.

If the system is not in the silent or PTL mode, then the system must be in the normal mode, step 226. In this case, it is determined whether the real time audio is enabled by checking an audio flag which is set by the record routine, the discussion of which is given with respect to FIGS. 12A-B, step 228. If the real time audio flag is on, the method extinguishes the real time audio channel and resets the audio flag, step 230. If the real time audio flag is off, the real time audio channel is enabled and the audio flag is set, step 232. After either extinguishing or enabling the real time audio channel, the interrupts are enabled and the system returns, steps 212-214.

Referring back to step 208, if the real time audio channel is off and the system is not recording, then the interrupt is a play switch interrupt. The method then places the system in the play state. Referring to FIG. 9B, there is shown a method for operating the system in the play state.

In the play state, a message is played back starting with the most recent message. If the next message is required, the play switch must be activated during the playing of the present message. Referring to FIG. 9B, if the synthesized audio is on, this implies that the next message is to be played. If the synthesized audio is off, the most recent message is played back. This is accomplished by the play "A" routine. Briefly, play "A" routine plays the most recent message stored in the two message slots as determined by the ALPHA variable. The play "A" routine is discussed in detail with respect to FIG. 10A. If the synthesized audio is on, the user desires to play back voice information stored in the next message slot. A variable STATE indicates if the synthesized audio is on or off. If STATE is zero, then the synthesized audio is off. If STATE is on, then the synthesized audio is on. The method first determines if STATE is equal to zero, step 238. If STATE is zero, the system executes the play "A" routine which will play the most recent message after the present synthesized audio message terminates.

Referring back to step 238, since the routine play "A" sets the variable STATE equal to one during its execution, the most recent message is playing. If the play switch is activated during the most recent message, the system plays back the second most recent message, step 242. Since the system finds the variable STATE equal to one, the system is vectored to a play "B" routine, step 243. The play "B" routine plays the second most recent message. At the beginning of the play "B" routine, the STATE variable is set equal to two. Referring back to step 242, if the play switch is activated during the play back of the second most recent message, the method vectors the system to extinguish the synthesized audio channel, steps 244-246. The method then sets the variable STATE equal to zero so that repeated activation of the play switch causes the system to repeat steps 234-248. If the state is higher than the number of message slots (as illustrated two message slots), then a microprocessor failure has probably occurred and the system jumps to the power on reset for reinitialization of the microprocessor, steps 247 and 249.

### C. Play A Routine

FIG. 10A shows a flow chart for the play "A" routine which plays the most recent message from one of two message slots in the paging receiver. The method begins by setting the variable STATE equal to one to notify the system that the most recent message is being played, step 250. In addition to setting the variable STATE equal to one, the synthesized audio channel is activated, step 251. The method then enables the interrupt to allow the system to respond to incoming information, step 252. If paging information is received during the play routine, the play routine is terminated and the paging receiver responds to the incoming paging information. The method then determines if there are any unread messages, step 254. If there are unread messages, the system is vectored to an unread message routine.

Referring back to step 254, if there are no unread messages, then the method checks to determine if there are messages stored, step 256. A variable ALPHA, dependent on the number of messages, is analyzed. If ALPHA equals zero, then no messages are in the receiver and the system generates a "memory empty" tone to indicate that there are no stored messages, steps 256-258. The system then deactivates the synthesized audio channel and waits for incoming paging information or for a user input, steps 260 and 262.

Referring back to step 256, if there are stored messages, then it is determined if the most recent message is in slot one or slot two. If ALPHA equals one, the most recent message is in the first message slot, step 264. The system begins reading the digitized data in the first message slot and providing a replica of the original audio information on the synthesized audio channel to the user, step 266. After playing back the most recent message, the system extinguishes the synthesized audio channel and returns, steps 260-262.

Referring back to step 264, if ALPHA is not equal to one, then ALPHA is equal to two or greater. If ALPHA equals two, the most recent message is in slot two and the system reads the digitized data from slot two and provides synthesized audio to the user, step 270. After playing back the synthesized audio from message slot two, the system extinguishes the audio channel and returns, steps 260-262.

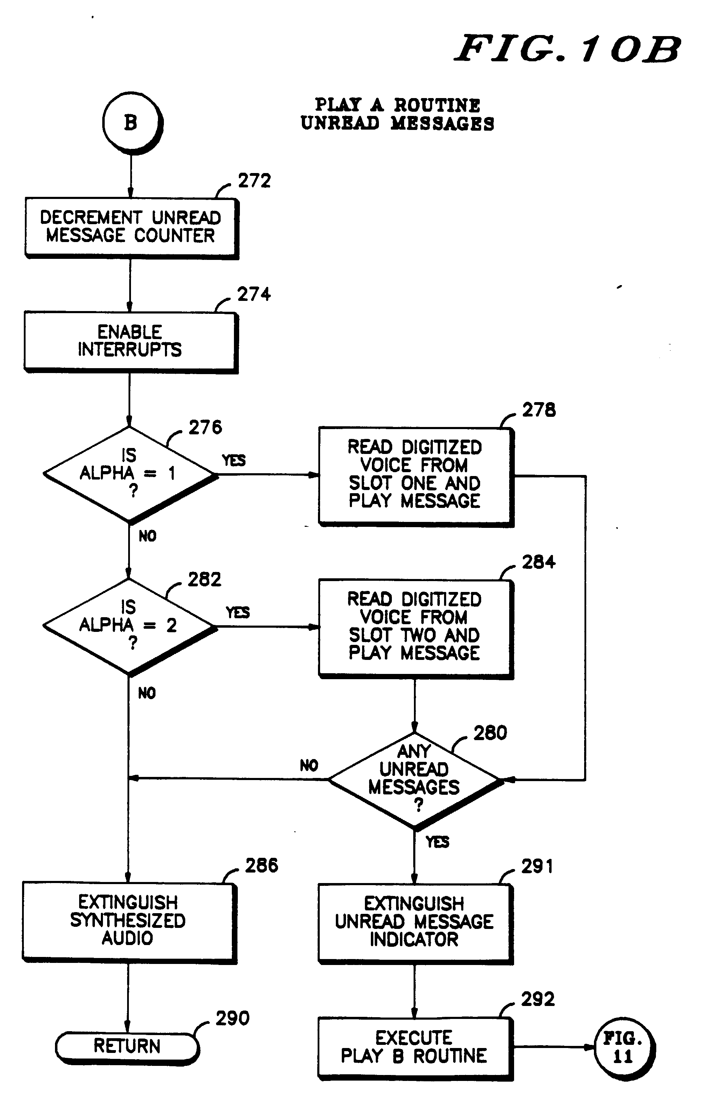

Referring back to step 268, if ALPHA is greater than two, a malfunction has occurred in the microprocessor. Thus, the system is vectored to a force reset, step 271. Referring back to step 254, if there are unread

messages, the system is vectored to an unread message routine as shown in FIG. 10B. Referring to FIG. 10B, the unread message counter is decremented to signify the playing back of an unread message, step 272. Next, the interrupts are enabled so the system can respond to incoming information, step 274. Next, ALPHA is tested to determine the location of the most recent message. If ALPHA equals one, the most recent message is in the first message slot and the system reads the digitized voice information from the most recent and plays a replica of the information on the synthesized audio channel, steps 276 and 278. After playing back the message from the first message slot, it is determined if there are any other unread messages remaining, step 280. If the answer is yes, then the system is vectored to the play "B" routine which plays back the second most recent message. Since in the illustrated embodiment there are only two message slots, the playing back of the second most recent message indicates no unread messages remain. Therefore, the unread message indicator is extinguished, step 291. The play "B" routine is then executed, step 292.

Referring back to step 276, if ALPHA is not equal to one, then it is determined if ALPHA equals two, step 282. If ALPHA equals two, then the most recent message is in the second message slot and the system plays back the digital stored voice in the second message slot, step 284. After playing back the digital information in the second message slot, it is determined if there are any unread messages, step 280. If so, then the second most recent message is played, steps 291 and 292. Referring back to step 282, if ALPHA is not equal to one or two, then there are no messages to play and the synthesized audio channel is extinguished, step 286. The system then returns to the standby state, step 290.

### D. Play B Routine

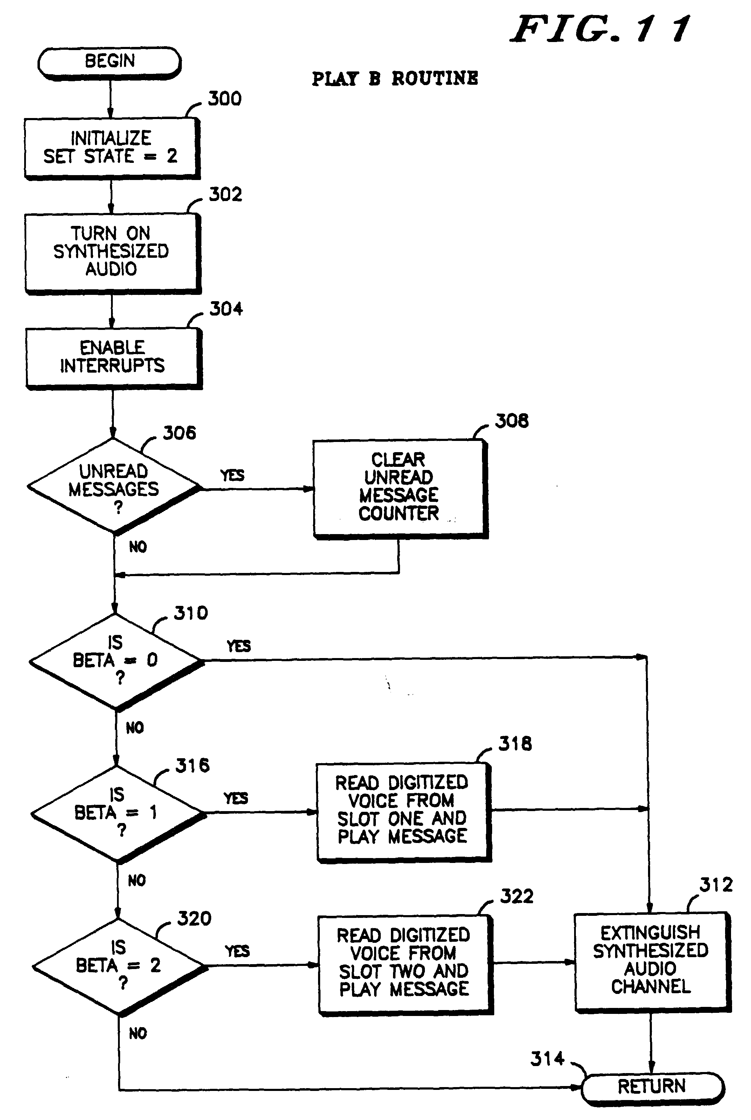

The play B routine plays back the second most recent message from either one of the message slots. The play "B" routine is executed after the play "A" routine executes. Referring to FIG. 11, the routine is entered and the variable STATE is set equal to two for notifying the system that the second most recent message is to be played, step 300. The synthesized audio channel is then activated and the interrupts enabled to allow the paging receiver to respond immediately to incoming paging information, steps 302 and 304. It is then determined if any unread messages are available, step 306. If there are unread messages available, then the unread message counter is cleared, since all unread messages will have been read after the play "B" routine replays the oldest message in a two-message slot system, step 308.

The method then determines the value of a variable named BETA. BETA determines whether the second most recent message is either in the first message slot or the second message slot. If BETA equals zero, there is no second most recent message and the system is vectored to the standby state after deactivating the audio channel, steps 310-314. If BETA is not equal to zero, then BETA is tested for the value one, step 316. If BETA equals one, the second most recent message is in the first message slot and the system plays back the second most recent message contained in the first message slot by synthesizing the digital voice information through the CODEC and replicating the voice information on the synthesized audio channel, step 318. After the synthesized voice information is played back, the system deactivates the synthesized audio channel and returns, steps 312-314.

Referring back to step 316, BETA is checked for the value two, step 320. If BETA equals two, then the second most recent message is in the second message slot and the system plays back the digitized voice information in the second message slot through the CODEC to the synthesized audio channel, step 322. After the voice information is played back, the system returns to the standby state, step 314.

### E. Record Routine

FIGS. 12A-B show a detailed flow chart for the record routine of the present invention. The record routine records the digitized audio signal from the CODEC in the appropriate message slot and tags the message as the most recent message.

The routine begins by updating the message pointers, ALPHA and BETA, step 350. In a two-slot message system, since ALPHA points to the most recent message, the message being recorded will replace the second most recent message pointed to by BETA. Therefore, the pointers ALPHA and BETA are swapped so that they point to the most recent message and second most recent message respectively. After the values for ALPHA and BETA are swapped, the method determines the mode of the system, step 352. The method then determines if it is in the silent mode, step 354. If the system is in the silent mode, the unread message indicator is activated to notify the user that a message has been recorded, step 356. Next, a silent flag is set to indicate a message has been recorded in the silent mode, step 358. The real time audio channel is extinguished and the unread message counter is incremented, step 360. The method then determines which message slot to store the digitized voice.

Referring back to step 354, if the system is not in the silent mode, then the system is either in the PTL or the normal mode. The method then determines if it is in the PTL mode, step 362. If it is in the PTL mode, then the unread message indicator is activated, a user alert generated, and the audio real time channel is extinguished, steps 364, 366 and 360.

Referring back to step 362, if the system is not in the PTL mode, then the system is in the normal mode, an audio flag is set and a user alert generated, step 368. The method then determines which message slot is available for recording by analyzing the value in the variable ALPHA. If ALPHA equals one, then the message is recorded in the first message slot, steps 370 and 372. As is evident, if a previous message is contained in the first message slot, the previous message is overwritten. If ALPHA is two, the message is recorded in the second message slot, steps 374 and 376. If ALPHA is not one or two, then an error has occurred and the microprocessor is reinitialized, step 378.

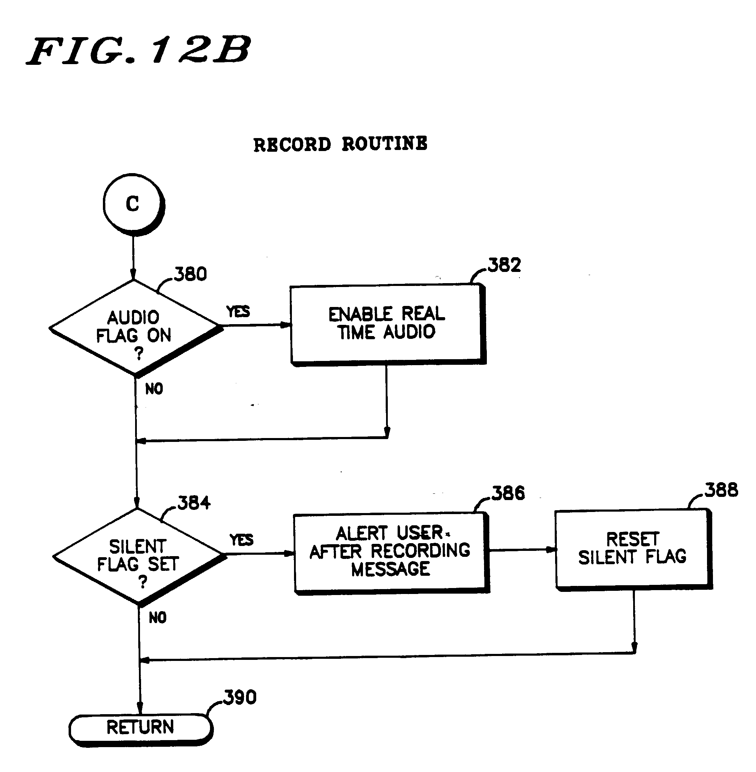

Referring to FIG. 12B, there is shown a continuation of the flow chart of FIG. 12A. After recording of the message in the appropriate message slot, the audio flag is checked, step 380. If the audio flag is set, the real time audio channel is enabled, step 382. Next, the silent flag is checked, step 384. If the silent flag has been previously set by the selection of the silent mode, a silent alert such as a vibration alert is generated, step 386. Please note that the silent alert occurs after recording the message. Therefore, in the silent mode, messages are received, digitized, and recorded and then the user is alerted. After alerting the user, the silent flag is reset, step 388. The method then returns to the standby state, step 390.

Thus, there has been shown an apparatus and method for transmitting information to a paging receiver in a plural population of paging receivers. The transmitted information includes control signals followed by analog information having at least one analog voice message. The paging receiver of the present invention receives and decodes the information to recover the control signals and the analog information. The control signals provide receiver control information. The receiver is selectively enabled correlating to the received control information. The received analog information is converted to digital information being a replica of the analog voice information and stored in a plurality of message slots in the paging receiver. In response to a user input, a message slot is selected and the stored digital information is recalled and presented to the user. The synthesized voice information presented to the user is a replica of the original analog voice message.

It should be apparent from the above description that numerous variations can be made from the preferred embodiment described herein without departing from the scope of the invention. Reference is therefore made to the claims which follow for a definition of the invention.

## Claims

1. A method of operating a communication receiver which receives information transmitted from an external source, including coded information having an address, followed by associated analog information having at least one analog voice message, said method comprising the steps of:
(a) receiving the information and decoding the coded information to recover the address;
(b) enabling the communication receiver correlating to the decoded address information to recover the analog voice message from the received analog information and to play in real-time, dependent on the state of a mode switch, the analog voice message;
said method characterized by the steps of:
(c) responding solely to the presence of the recovered analog voice message, and irrespective of said state of said mode switch, to convert said analog voice message to a digital voice message representative of said analog voice message; and
(d) storing at least part of the digital voice message in a memory of the communication receiver.

2. The method of claim 1, wherein the communication receiver includes a first control switch, and said method further includes the steps of:
(e) sensing the activation of the first control switch and generating a first electrical signal in response thereof; and
(f) in response to the first electrical signal, terminating the real time audible voice information while continuing to convert the analog voice message to the digital voice message to store the digital voice message.

3. The method of claim 2, wherein the communication receiver includes at least a first and second control switch, said method further including the steps of:
(g) sensing the activation of the second control switch and generating a second electrical signal in response thereof;
(h) in response to the second electrical signal, reconverting the digital voice message to the analog voice message; and
(i) producing audible voice information from the analog voice message, the audible voice information being a replica of the original analog voice message.

4. The method of claim 3, further including the step of:
(j) activating the second control switch for initiating the playback of a previously stored message; and
(k) repeatedly activating the second control switch for initiating playback of a subsequently stored digital voice message wherein an Nth activation of the switch initiates replay of an Nth stored digital voice message.

5. A digitized voice communication device (10) comprising:
means (12) for receiving information, transmitted from an external source (not shown), the information including coded information having an address, and associated analog information having at least one analog voice message, and
means (e.g. 14, 26) for decoding the coded information to recover the address to determine whether the associated analog information is intended for the communication device (10);
means (80) governed by the decoding means (e.g. 14, 26) to recover the analog voice message from the received analog information and to play in real-time, dependent on the state of a mode switch, the analog voice message;
said digitized voice communication device characterized by:
converting means (38) governed solely by said decoding means (e.g. 14, 26) and the presence of the recovered analog voice message and irrespective of said state of said mode switch to convert said analog voice message to a digital voice message representative of the recovered analog voice message; and
memory means (50) for storing at least part of the digital voice message.

6. The digitized voice communication device (10) of claim 5, including an alerting means (32, 33, 34, 35 or 36) for generating an alert signifying receipt of information after storing the digital voice message.

7. The digitized voice communication device (10) of claim 5 or 6, wherein said memory means (50) being operably coupled to said converting means (38) provides the digital stored voice message to said converting means (38), wherein said converting means (38) is operative to reconvert the digital voice message into audible information representative of the recovered analog voice message.

8. The digitized voice communication device (10) of claim 5,6 or 7, further comprising a control switch (56) for initiating a playback of a previously stored digital voice message.

9. A digital voice storage communication system including:
at least one transmitting station (not shown) selectively addressing and transmitting a communication packet including an address code followed by a voice message;
at least two receiving stations (10) each having a corresponding predetermined stored address, each comprising:
a) a receiver circuit (12) for receiving an incoming signal carrying said communication packet,
b) decoder circuitry (14) responsive to said receiver circuit (12) for recovering the voice message and for playing in real-time, dependent on the state of a mode switch, the voice message;
said digitized voice storage communication system characterized in that:
the decoder circuitry (14) is responsive to said receiver circuit (12) for emitting a record enable signal responsive to said communication packet carried by said incoming signal, and further includes comparator means (70) for comparing said predetermined stored address with said communication packet address code and automatically generating said record enable signal in response to said comparison, without reference to a separate record enable signal from said transmitter (not shown) and irrespective of said state of said mode switch;
and wherein the digitized voice storage communication system further comprises:
c) signal conversion circuitry (38) for converting said voice message of said communication packet from analog to digital format;
d) digital memory (50) for storing at least part of said voice message of said communication packet in response to said record enable signal; and
e) signal conversion circuitry (38) for converting digital data in said digital memory into analog data for playback.

10. The digital voice storage communication system of claim 9, wherein said decoder circuitry (14) further includes circuitry (70) for terminating the storing of said voice message within said digital memory (50) when said record enable signal ceases.

11. The digital voice storage communication system of claim 10, additionally comprising a timer (76), wherein said decoder (70) is responsive to said timer (76) to terminate said enable signal upon expiration of a preset period of time thereby enabling said digital memory (50) to record a new voice message.

12. The digital voice storage communication system of claim 9. 10 or 11, additionally comprising a memory address selector (72) for storing information indicative of available memory space to protect said memory from recording over previously stored messages.

13. The digital voice storage communication system of claim 12, wherein said memory address selector (72) generates a signal to erase the recorded voice message which has resided in said digital memory (50) longer than any other stored message.

14. The digital voice storage communication system of any one of claims 9 to 13, wherein said communication packet additionally comprises command data and wherein said address code and said command data are followed with substantially no delay by said voice message in said communication data packet.

15. The digital voice storage communication system of any one of claims 9 to 14, wherein said communication packet includes a voice message whose length is variable.

16. The digital voice storage communication system of any one of claims 9 to 15, additionally comprising:
an operator activated playback switch (56) for retrieving said voice message stored in said digital memory (50) and for activating said signal conversion circuitry (38) for playback.

17. The digital voice storage communication system of claim 16, wherein the digital memory stores a plurality of voice messages and the digital voice storage communication system additionally comprises:
a switch (56) for selection of said voice messages from said digital memory (50) for conversion by said signal conversion circuitry (38) for playback.

## Patentansprüche

1. Verfahren zum Betrieb eines Kommunikationsempfängers, der von einer äußeren Quelle gesendete Information empfängt, die codierte Information mit einer Adresse gefolgt von zugehöriger Analoginformation mit wenigstens einer analogen Sprachnachricht einschließt, wobei das Verfahren die Schritte umfaßt:
(a) Empfangen der Information und Decodieren der codierten Information, um die Adresse zurückzugewinnen;
(b) Ermöglichen dem Kommunikationsempfänger, sich mit der decodierten Adresseninformation zu korrelieren, um die analoge Sprachnachricht aus der empfangenen Analoginformation zurückzugewinnen und die analoge Sprachnachricht, abhängend von dem Zustand eines Betriebsartschalters, in Echtzeit abzuspielen;
wobei das Verfahren gekennzeichnet ist durch die Schritte:
(c) Ansprechen einzig auf das Vorhandensein der zurückgewonnenen analogen Sprachnachricht und ungeachtet des Zustandes des Betriebsartschalters, um die analoge Sprachnachricht in eine digitale Sprachnachricht umzuwandeln, die die analoge Sprachnachricht darstellt, und
(d) Speichern wenigstens eines Teils der digitalen Sprachnachricht in einem Speicher des Kommunikationsempfängers.

2. Verfahren nach Anspruch 1, bei dem der Kommunikationsempfänger einen ersten Steuerschalter enthält und das Verfahren weiter die Schritte umfaßt:
(e) Abtasten der Betätigung des ersten Steuerschalters und Erzeugen eines ersten elektrischen Signals als Reaktion darauf und
(f) als Reaktion auf das erste elektrische Signal Beendigen der hörbaren Echtzeit-Sprachinformation, während das Umwandeln der analogen Sprachnachricht in die digitale Sprachnachricht fortgesetzt wird, um die digitale Sprachnachricht zu speichern.

3. Verfahren nach Anspruch 2, bei dem der Kommunikationsempfänger wenigstens einen ersten und zweiten Steuerschalter enthält, wobei das Verfahren weiter die Schritte umfaßt:
(g) Abtasten der Betätigung des zweiten Steuerschalters und Erzeugen eines zweiten elektrischen Signals als Reaktion darauf;
(h) als Reaktion auf das zweite elektrische Signal Rückumwandeln der digitalen Sprachnachricht in die analoge Sprachnachricht und
(i) Erzeugen hörbarer Sprachinformation aus der analogen Sprachnachricht, wobei die hörbare Sprachinformation eine Nachbildung der ursprünglichen analogen Sprachnachricht ist.

4. Verfahren nach Anspruch 3, weiter umfassend den Schritt:
(j) Betätigen des zweiten Steuerschalters, um die Wiedergabe einer vorangehend gespeicherten Nachrichricht einzuleiten, und
(k) wiederholt Betätigen des zweiten Steuerschalters, um die Wiedergabe einer nachfolgend gespeicherten digitalen Sprachnachricht einzuleiten, wobei eine n-te Betätigung des Schalters die Wiedergabe einer n-ten gespeicherten digitalen Sprachnachricht einleitet.

5. Kommunikationsgerät mit digitalisierter Sprache (10), umfassend:
eine Einrichtung (12), die von einer äußeren Quelle (nicht gezeigt) gesendete Information empfängt, wobei die Information codierte Information mit einer Adresse und zugehörige Analoginformation mit wenigstens einer analogen Sprachnachricht umfaßt;
eine Einrichtung (z.B. 14, 26) zum Decodieren der codierten Information, um die Adresse zurückzugewinnen, um festzustellen, ob die zugehörige Analoginformation für das Kommunikationsgerät (10) bestimmt ist, und
eine Einrichtung (80), die durch die Decodierungseinrichtung (z.B. 14, 26) gesteuert wird, um die analoge Sprachnachricht aus der empfangenen Analoginformation zurückzugewinnen und die analoge Sprachnachricht, abhängend von dem Zustand eines Betriebsartschalters, in Echtzeit abzuspielen,
wobei das Kommunikationsgerät mit digitalisierter Sprache gekennzeichnet ist durch:
eine Umwandlungseinrichtung (38), die einzig durch die Decodierungseinrichtung (z.B. 14, 26) und das Vorhandensein der zurückgewonnenen analogen Sprachnachricht und ungeachtet des Zustandes des Betriebsartschalters gesteuert wird, um die analoge Sprachnachricht in eine digitale Sprachnachricht umzuwandeln, die die zurückgewonnene analoge Sprachnachricht darstellt, und
eine Speichereinrichtung (50), die wenigstens einen Teil der digitalen Sprachnachricht speichert.

6. Kommunikationsgerät mit digitalisierter Sprache (10) nach Anspruch 5, mit einer Alarmeinrichtung (32, 33, 34, 35 oder 36) zum Erzeugen eines Alarms, der den Empfang von Information nach dem Speichern der digitalen Sprachnachricht kundtut.

7. Kommunikationsgerät mit digitalisierter Sprache (10) nach Anspruch 5 oder 6, bei dem die Speicherinrichtung (50), die funktionell mit der Umwandlungseinrichtung (38) verbunden ist, der Umwandlungseinrichtung (38) die gespeicherte digitale Sprachnachricht zur Verfügung stellt, wobei die Umwandlungseinrichtung (38) die digitale Sprachnachricht in hörbare Information rückumwandelt, die die zurückgewonnene analoge Sprachnachricht darstellt.

8. Kommunikationsgerät mit digitalisierter Sprache (10) nach Anspruch 5, 6 oder 7, weiter umfassend einen Steuerschalter (56) zum Einleiten einer Wiedergabe einer vorangehend gespeicherten digitalen Sprachnachricht.

9. Kommunikationssystem mit digitaler Sprachspeicherung, umfassend:
wenigstens eine Sendestation (nicht gezeigt), die ein Kommunikationspaket, das einen Adressencode gefolgt von einer Sprachnachricht enthält, selektiv adressiert und sendet;
wenigstens zwei Empfangsstationen (10) mit je einer entsprechenden, vorbestimmten gespeicherten Adresse, wobei jede umfaßt:
a) eine Empfängerschaltung (12) zum Empfangen eines ankommenden Signals, das das Kommunikationspaket befördert;
b) eine Decoderschaltung (14), die auf die Empfängerschaltung (12) anspricht, um die Sprachnachricht zurückzugewinnen und die Sprachnachricht, abhängend von dem Zustand eines Betriebsartschalters, in Echtzeit abzuspielen,
wobei das Kommunikationssystem mit digitaler Sprachspeicherung dadurch gekennzeichnet ist, daß
die Decoderschaltung (14) auf die Empfängerschaltung (12) anspricht, um als Reaktion auf das durch das ankommende Signal beförderte Kommunikationspaket ein Aufnahme-Freigabesignal auszugeben, und weiter eine Vergleichseinrichtung (70) umfaßt, die die vorbestimmte gespeicherte Adresse mit dem Adressencode des Kommunikationspakets vergleicht und als Reaktion auf den Vergleich, ohne Bezug auf ein getrenntes Aufnahme-Freigabesignal von dem Sender (nicht gezeigt) und ungeachtet des Zustandes des Betriebsartschalters automatisch das Aufnahme-Freigabesignal erzeugt,
und worin das Kommunikationssystem mit digitaler Sprachspeicherung weiter umfaßt:
c) eine Signalumwandlungsschaltung (38), die die Sprachnachricht des Kommunikationspakets von einem analogen in ein digitales Format umwandelt;
d) einen Digitalspeicher (50), der wenigstens einen Teil der Sprachnachricht des Kommunikationspakets als Reaktion auf das Aufnahme-Freigabesignal speichert, und
e) eine Signalumwandlungsschaltung (38), die die digitalen Daten in dem Digitalspeicher zur Wiedergabe in analoge Daten umwandelt.

10. Kommunikationssystem mit digitaler Sprachspeicherung nach Anspruch 9, bei dem die Decoderschaltung (14) weiter eine Schaltung (70) umfaßt, die das Speichern der Sprachnachricht innerhalb des Digital-Speichers (50) beendigt, wenn das Aufnahme-Freigabesignal endet.

11. Kommunikationssystem mit digitaler Sprachspeicherung nach Anspruch 10, das zusätzlich einen Zeitgeber (76) umfaßt, worin der Decoder (70) auf den Zeitgeber (76) anspricht, um das Freigabesignal nach Ablauf einer voreingestellten Zeitdauer zu beendigen, um dadurch dem Digitalspeicher (50) zu ermöglichen, eine neue Sprachnachricht aufzuzeichnen.

12. Kommunikationssystem mit digitaler Sprachspeicherung nach Anspruch 9, 10 oder 11, das zusätzlich einen Speicheradressenselektor (72) umfaßt, der verfügbaren Speicherplatz anzeigende Information speichert, um den Speicher vor dem Aufzeichnen über vorangehend gespeicherte Nachrichten zu schützen.

13. Kommunikationssystem mit digitaler Sprachspeicherung nach Anspruch 12, bei dem der Speicheradressenselektor (72) ein Signal erzeugt, um die aufgezeichnete Sprachnachricht zu löschen, die sich länger als jede andere gespeicherte Nachricht in dem Digitalspeicher (50) aufgehalten hat.

14. Kommunikationssystem mit digitaler Sprachspeicherung nach einem der Ansprüche 9 bis 13, bei dem das Kommunikationspaket zusätzlich Befehlsdaten umfaßt und bei dem dem Adressencode und den Befehlsdaten im wesentlichen ohne Verzögerung die Sprachnachricht in dem Kommunikationsdatenpaket folgt.

15. Kommunikationssystem mit digitaler Sprachspeicherung nach einem der Ansprüche 9 bis 14, bei dem das Kommunikationspaket eine Sprachnachricht umfaßt, deren Länge veränderlich ist.

16. Kommunikationssystem mit digitaler Sprachspeicherung nach einem der Ansprüche 9 bis 15, das zusätzlich umfaßt:
einen bedienerbetätigten Wiedergabeschalter (56) zum Wiedergewinnen der in dem Digitalspeicher (50) gespeicherten Sprachnachricht und zum Aktivieren der Signalumwandlungsschaltung (38) zur Wiedergabe.

17. Kommunikationssystem mit digitaler Sprachspeicherung nach Anspruch 16, bei dem der Digitalspeicher eine Mehrzahl von Sprachnachrichten speichert und das Kommunikationssystem mit digitaler Sprachspeicherung zusätzlich umfaßt:
einen Schalter (56), der die Sprachnachrichten aus dem Digitalspeicher (50) zum Umwandeln durch die Signalumwandlungsschaltung (38) für die Wiedergabe auswählt.

## Revendications

1. procédé permettant de faire un récepteur de communications qui reçoit des informations émises par une source extérieure, comportant des informations codées ayant une adresse, suivies par des informations analogiques associées présentant au moins un message analogique vocal, ledit procédé comprenant les étapes suivantes :
(a) réception des informations et décodage des informations codées pour récupérer l'adresse ;
(b) mise en service du récepteur de communications en corrélation avec les informations d'adresse décodées afin de récupérer le message analogique vocal à partir des informations analogiques reçues et de lire en temps réel, selon l'état du commutateur de mode, le message analogique vocal ;
Ledit procédé étant caractérisé par les étapes suivantes ;
(c) réponse uniquement à la présence du message analogique vocal récupéré, et indépendamment dudit état dudit commutateur de mode, pour convertir ledit message analogique vocal en un message vocal numérique représentatif dudit message analogique vocal ; et
(d) mémorisation d'au moins une partie du message vocal numérique dans une mémoire du récepteur de communications.

2. Procédé selon la revendication 1, dans lequel le récepteur de communications comporte un premier commutateur de commande, et ledit procédé comprend en outre les étapes suivantes ;
(e) détection du déclenchement du premier commutateur de commande et son émission d'un premier signal électrique en réponse ; et
(f) en réponse au premier signal électrique, arrêt des informations vocales audibles en temps réel tout en continuant la conversion du message analogique vocal en message vocal numérique pour mémoriser le message vocal numérique.

3. Procédé selon la revendication 2, dans lequel le récepteur de communications comporte au moins un premier et un second commutateur de commande, ledit procédé comprenant en outre les étapes suivantes ;
(g) détection du déclenchement du second commutateur de commande et en réponse émission d'un second signal électrique ;
(h) en réponse au second signal électrique, reconversion du message vocal numérique en message analogique vocal ; et
(i) production des informations vocales audibles à partir du message analogique vocal, les informations vocales audibles étant une copie exacte du message analogique vocal d'origine.

4. Procédé selon la revendication 3, comprenant en outre les étapes de :
(j) déclenchement du second commutateur de commande pour amorcer la reproduction d'un message mémorisé précédemment : et
(k) déclenchement de façon itérative du second commutateur de commande pour amorcer la reproduction d'un message vocal numérique mémorisé postérieurement dans lequel un Nième déclenchement du commutateur amorce la relecture d'un Nième message vocal numérique mémorisé.

5. Dispositif de communications vocales numérisées (10) comprenant :
un moyen (12) permettant de recevoir des informations, émises par une source extérieure (non représentée), les informations comportant des informations codées ayant une adresse, et des informations analogiques associées ayant au moins un message analogique vocal, et
un moyen (par exemple 14, 26) permettant de décoder les informations codées pour récupérer l'adresse afin de déterminer si les informations analogiques associées sont prévues pour le dispositif de communications (10) ;
un moyen (80) régi par le moyen de décodage (par exemple 14, 26) permettant de récupérer le message analogique vocal issu des informations analogiques reçues et de lire en temps réel, selon l'état du commutateur de mode, le message analogique vocal ;
ledit dispositif de communications vocales numérisés étant caractérisé par :
un moyen de conversion (38) régi exclusivement par ledit moyen de décodage (par exemple 14, 26) et la présence du message analogique vocal récupéré et indépendamment dudit état dudit commutateur de commande, permettant de convertir ledit message analogique vocal en un message vocal numérique représentatif du message analogique vocal récupéré ; et
un moyen de mémoire (50) permettant de mémoriser au moins une partie du message vocal numérique.

6. Dispositif de communications vocales numérisé (10) selon la revendication 5, comportant un moyen d'alerte (32, 33, 34, 35 ou 36) permettant de générer une alerte signifiant la réception d'information après la mémorisation du message vocal numérique.

7. Dispositif de communications vocales numérisé (10) selon l'une quelconque des revendications 5 et 6, dans lequel ledit moyen de mémoire (50) étant couplé de façon pratique audit moyen de conversion (38) fournit le message vocal numérique mémorisé audit moyen de conversion (38), dans lequel ledit moyen de conversion(38) est actif pour reconvertir le message vocal numérique en informations audibles représentatives. du message analogique vocal récupéré.

8. Dispositif de communications vocales numérisé (10) selon l'une quelconque des revendications 5, 6, et 7, comprenant en outre un commutateur de commande (56) permettant d'amorcer une relecture d'un message vocal numérique mémorisé précédemment.

9. Système numérique de communications à mémoire vocale comprenant :
au moins une station émettrice ( non représentée) adressant et émettant sélectivement un paquet de communications comportant un code d'adresse suivi par un message vocal;
au moins deux stations réceptrices (10) chacune ayant une adresse mémorisée prédéterminée correspondante, chacune comprenant :
(a) un circuit récepteur (12) permettant de recevoir un signal d'entrée acheminant ledit paquet de communications ;
(b) un ensemble des circuits décodeur (14) réagissant audit circuit récepteur (12) permettant de récupérer le message vocal et de lire en temps réel, selon l'état d'un commutateur de mode, le message vocal;
ledit système numérique de communications à mémoire vocale étant caractérisé en ce que :
l'ensemble des circuits décodeur (14) réagit audit circuit récepteur (12) afin d'émettre un signal de validation d'enregistrement réagissant audit paquet de communications acheminé par ledit signal d'entrée, et comportant en outre un moyen comparateur (70) pour comparer ladite adresse mémorisée prédéterminée audit code d'adresse du paquet de communications et générant automatiquement un signal de validation d'enregistrement en réponse à ladite comparaison, sans référence à un signal de validation d'enregistrement séparé dudit émetteur (non représenté) et indépendamment dudit état dudit commutateur de mode ;
et dans lequel le système de communication à mémoire vocale numérique comprend en outre :
c) un ensemble des circuits de conversion de signal (38) permettant de convertir ledit message vocal dudit paquet de communications à partir de la structure analogique en numérique ;
d) une mémoire numérique (50) permettant de mémoriser au moins une partie dudit message vocal dudit paquet de communications en réponse audit signal de validation d'enregistrement ; et
e) un ensemble de circuits de conversion de signal (38) permettant de convertir des données numériques dans ladite mémoire numérique en données analogiques pour reproduction.

10. Système numérique de communications à mémoire vocale selon la revendication 9, dans lequel ledit ensemble de circuits décodeur (14) comporte en outre un ensemble de circuits (70) pour arrêter la mémorisation dudit message vocal à l'intérieur de ladite mémoire numérique (50) quand ledit signal de validation d'enregistrement cesse.

11. Système numérique de communications à mémoire vocale selon la revendication 10, comprenant en outre un temporisateur (76), dans lequel ledit décodeur (70) réagit audit temporisateur (76) pour mettre fin audit signal de validation à l'achèvement d'une durée de préinitialisation validant ainsi ladite mémoire numérique (50) pour enregistrer un nouveau message à fréquences vocales.

12. Système numérique de communications à mémoire vocale selon l'une quelconque des revendications 9, 10, et 11, comprenant en outre un sélecteur d'adresse de mémoire (72) permettant mémoriser des informations indicatives de l'espace de mémoire disponible afin de protéger ladite mémoire de l'enregistrement par-dessus des messages mémorisés précédemment.

13. Système numérique de communications à mémoire vocale selon la revendication 12, dans lequel ledit sélecteur d'adresse de mémoire (72) génère un signal permettant d'effacer le message vocal enregistré qui a résidé dans ladite mémoire numérique (50) plus longtemps que tout autre message mémorisé.

14. Système numérique de communications à mémoire vocale selon l'une quelconque des revendications 9 à 13, dans lequel ledit paquet de communications comprend en outre des données de commande et dans lequel ledit code d'adresse et lesdites données de commande sont suivis pratiquement sans retard par ledit message vocal dans ledit paquet de données de communications.

15. Système numérique de communications à mémoire vocale selon l'une quelconque des revendications de 9 à 14, dans lequel ledit paquet de communications comporte un message vocal dont la durée est variable.

16. Système numérique de communications à mémoire vocale selon l'une quelconque des revendications de 9 à 15, comprenant en outre :
un commutateur de relecture actionné par un opérateur (56) permettant de récupérer ledit message vocal mémorisé dans ladite mémoire numérique (50) et d'activer l'ensemble des circuits de conversion de signaux (38) pour la relecture.

17. Système numérique de communications à mémoire vocale selon la revendication 16, dans lequel la mémoire numérique mémorise une pluralité de messages vocaux et le système numérique de communications à mémoire vocale comprend en outre :
un commutateur (56) permettant de sélectionner lesdits messages vocaux de ladite mémoire numérique (50) pour une conversion par ledit ensemble des circuits de conversion de signaux (38) pour reproduction.
